# EUROPEAN PATENT SPECIFICATION

(11) **EP 3 767 773 B1**
(45) Date of publication and mention of the grant of the patent: **07.05.2025**
(21) Application number: 19768098.6
(22) Date of filing: 12.03.2019
(51) Int. Cl.: H02J 3/46, H02J 3/38, H02J 1/08, H02J 1/10, H02J 3/32, B60L 53/10, B60L 53/51, B60L 53/52, B60L 53/63, B60L 53/67

(54) **POWER SUPPLY/DEMAND SYSTEM, CONTROL APPARATUS AND POWER SUPPLY/DEMAND METHOD**
ENERGIEVERSORGUNGS-/NACHFRAGESYSTEM, STEUERVERFAHREN UND ENERGIEVERSORGUNGS-/NACHFRAGEVERFAHREN
SYSTÈME DE DEMANDE/D'ALIMENTATION ÉLECTRIQUE, APPAREIL DE COMMANDE ET PROCÉDÉ DE DEMANDE/D'ALIMENTATION ÉLECTRIQUE

(30) Priority: 14.03.2018 JP 2018046398
(43) Date of publication of application: 20.01.2021
(73) Proprietor: Hitachi Power Solutions Co., Ltd., Hitachi-shi, Ibaraki 317-0073 (JP)
(72) Inventor: MIYABE, Shouzou, Hitachi-shi, Ibaraki 317-0073 (JP); IDE, Kazumasa, Hitachi-shi, Ibaraki 317-0073 (JP); KOMURA, Akiyoshi, Hitachi-shi, Ibaraki 317-0073 (JP); FUJIWARA, Hiroshi, Hitachi-shi, Ibaraki 317-0073 (JP)
(74) Representative: MERH-IP Matias Erny Reichl Hoffmann Patentanwälte PartG mbB
(86) International application number: PCT/JP2019/010067
(87) International publication number: WO 2019/176955

(56) References cited:
- EP-A1- 3 089 310
- DE-A1- 102015 109 967
- JP-A- 2006 042 530
- JP-A- 2008 118 845
- JP-A- 2008 172 852
- JP-A- 2013 038 871
- JP-A- 2014 131 413
- JP-A- 2016 119 737
- JP-A- 2017 516 451
- JP-A- H04 138 025
- JP-A- H10 198 467
- US-A1- 2010 201 199
- US-A1- 2012 267 952
- US-A1- 2014 285 010
- US-A1- 2017 358 929

## Description

### Technical Field

The present invention relates to an electricity supply-demand system, a control device, and an electricity supply-demand method.

### Background Art

Installation of power generating devices by internal-combustion power (hereinafter, referred to as "internal-combustion power generating devices) for use in power compensation facilities, in-house power generation facilities at time of emergency, and the like for the purpose of stable supply of electricity by renewable energy is growing. Furthermore, it is predicted that needs of DC power supply devices such as internal-combustion power generating devices more and more rises with a view to supply of power to controlled regions.

JP-2016-82740-A discloses, for example, a method of controlling operation of power generation facility, the method "including: a priority setting step of setting priorities for a plurality of power generation means on the basis of index values correlated with operational states of the plurality of power generation means; an operation number determination step of determining the number of power generation means to be operated on the basis of a total power generation amount target value of the power generation facility; a power generation means operation step of starting or stopping the power generation means as needed, in such a manner that only the determined number of power generation means to be operated are operated on the basis of the priorities among the plurality of power generation means; and a switching time determination step of determining a time at which a target power generation amount and a scheduled variation, within a predetermined period in the power generation facility, calculated from a power generation schedule pattern for the predetermined period are each equal to or greater than a threshold Ptgt_th and equal to or smaller than a threshold Cth, as a priority switching time at which new priorities are set in the priority setting step in place of the last priorities," and a device for controlling operation of a power generation facility.

Furthermore, EP 3 089 310 A1 discloses a power conversion system that uses created energy and stored energy, wherein multiple conversion devices are connected to a single system interconnection inverter unit, and wherein the conversion devices share the system interconnection inverter unit. Eventually, DE 10 2015 109 967 A1 discloses a device for a bidirectional connection of two power networks including a a bidirectional DC-DC converter which is configured such that the electric power flowing across the DC-DC converter at a given time t can be set to at least three values as a function of time t.

### Summary of the Invention

### Problems to be Solved by the Invention

However, the conventional DC power supply devices have been installed for a single use application. Owing to this, when a DC power supply device installed for one use application is used for another use application, it is necessary to revise connection to instruments, connection to systems, and the like. Furthermore, a plurality of DC power supply devices are often configured to be connected in parallel for ensuring high output power. When the use application is to be changed with such a configuration, more complicated work is required.

With the technique described in JP-2016-82740-A, for example, only a gas engine power generation facility and/or a diesel power generation facility is configured for use in supply of power. Owing to this, this technique provides a system only for continuous use for one use application once the system is installed for the use application.

Specifically, with the technique described in JP-2016-82740-A, power generated in a plurality of gas engine power generation facilities and/or diesel power generation facilities are synthesized and output. It is noted herein that with this technique, in a case in which necessary power falls below a total power generation amount and power generation facilities unnecessary to activate are present, the power generation facilities remain stopped. Owing to this, it is impossible to make effective use of the power generation facilities.

The present invention has been achieved in light of such circumstances, and an object of the present invention is to realize flexible supply of power.

### Means for Solving the Problems

The present invention is set out in the appended set of claims. Preferred embodiments of the present invention are described in the dependent claims.

### Advantages of the Invention

According to the present invention, it is possible to realize flexible supply of power.

### Brief Description of the Drawings

FIG. 1 is a diagram depicting a configuration example (example 1) of an electricity supply-demand system Z according to the present embodiment.
FIG. 2 is a diagram depicting a configuration example (example 2) of the electricity supply-demand system Z according to the present embodiment.
FIG. 3 is a diagram depicting a configuration example (example 3) of the electricity supply-demand system Z according to the present embodiment.
FIG. 4 is a diagram depicting a configuration example (example 4) of the electricity supply-demand system Z according to the present embodiment.
FIG. 5 is a diagram depicting a configuration example (example 5) of the electricity supply-demand system Z according to the present embodiment.
FIG. 6 is a diagram depicting a configuration example (example 6) of the electricity supply-demand system Z according to the present embodiment.
FIG. 7 is a diagram depicting a configuration example (example 7) of an electricity supply-demand system Za according to the present embodiment.
FIG. 8 is a diagram depicting a configuration example (example 8) of the electricity supply-demand system Za according to the present embodiment.
FIG. 9 is a diagram depicting a configuration example of a control device 1 according to the present embodiment.
FIG. 10 is a diagram depicting a configuration example of a power synthesis/distribution device used in the present embodiment.
FIG. 11 is a flowchart depicting process procedures performed by the electricity supply-demand system Z at an initial time (at a time of installing instruments).
FIG. 12 is a flowchart depicting process procedures performed by the electricity supply-demand system Z when an instrument connected to a DC instrument joint changes.
FIG. 13 is a flowchart depicting process procedures performed by the electricity supply-demand system Z when an abnormality occurs in a DC power supply device.
FIG. 14 is a flowchart depicting process procedures performed by the electricity supply-demand system Z when a fluctuation occurs in system power or load power (consumed power of a customer load D).

### Modes for Carrying Out the Invention

A mode for carrying out the present invention (referred to as "embodiment") will next be described with reference to the drawings as appropriate.

### [Electricity supply-demand system Z]

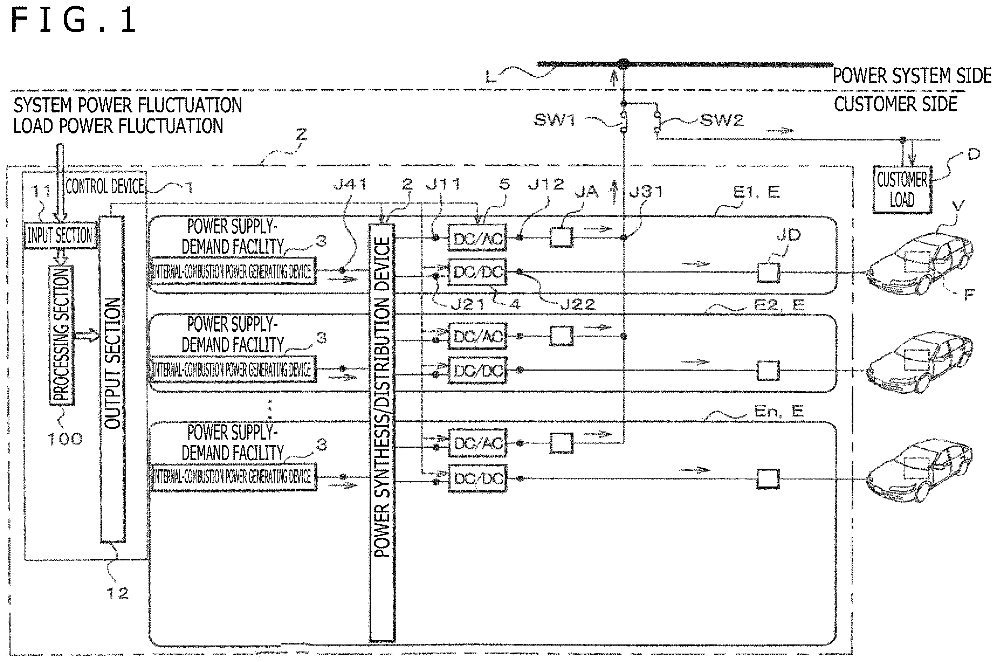

Examples of a configuration of an electricity supply-demand system Z according to the present embodiment will first be described with reference to FIGS. 1 to 8. It is noted that similar constituent elements are denoted by the same reference characters and description thereof will be omitted in FIGS. 1 to 8. Furthermore, in FIGS. 1 to 8, a solid-line arrow indicates a flow of power (current).

### (Configuration example 1)

FIG. 1 is a diagram depicting a configuration example (example 1) of the electricity supply-demand system Z according to the present embodiment.

The electricity supply-demand system Z has a control device 1 and n numbers of electricity supply-demand facilities E (E1 to En).

A vehicle V such as an electric-powered vehicle or a plug-in hybrid vehicle capable of storing power from outside in an electric storage device F is connected to each of the electricity supply-demand facilities E1 to En.

Each of the electricity supply-demand facilities E1 to En has an internal-combustion power generating device 3, a DC/DC converter 4, a DC instrument joint JD, a DC/AC converter 5, and an AC instrument joint JA.

Furthermore, a power synthesis/distribution device 2 is installed across the electricity supply-demand facilities E1 to En.

The internal-combustion power generating device 3 is a power generating device capable of generating DC power, and is a diesel engine power generating device, a gas turbine power generating device, or the like configured with an AC/DC converter, an internal combustion engine, and a generator. It is noted that the internal-combustion power generating device 3 is connected to the power synthesis/distribution device 2 by a DC power supply device joint J41. A device, such as the internal-combustion power generating device 3, for supplying the DC power will be denoted as "DC power supply device" in the present description.

The vehicle V is connected to each DC instrument joint JD.

In addition, a customer load D is connected to each AC instrument joint JA via switches SW1 and SW2. Furthermore, a power system L is connected to the switch SW1.

The power synthesis/distribution device 2 synthesizes the DC power generated (supplied) by the internal-combustion power generating devices 3, and distributes the DC power to the DC/DC converters 4 or the DC/AC converters 5.

Each DC/DC converter 4 converts a voltage of the distributed power into a charge voltage or the like for the vehicle V (electric storage device F) connected thereto. In a case in which a charging method of charging the electric storage device F with the power is constant-current constant-voltage charging, the DC/DC converter 4 converts the power in such a manner that a current becomes a constant current before the charge voltage is equal to a predetermined charge voltage. It is noted that the power synthesis/distribution device 2 exercises control over the current in advance such that the current does not exceed a rated value of the electric storage device F, as described later. The DC/DC converter 4 then converts the power in such a manner that the charge voltage becomes a constant voltage when the charge voltage is equal to the predetermined voltage. It is noted that each DC/DC converter 4 is connected to the power synthesis/distribution device 2 and the DC instrument joint JD by DC/DC converter joints J21 and J22, respectively.

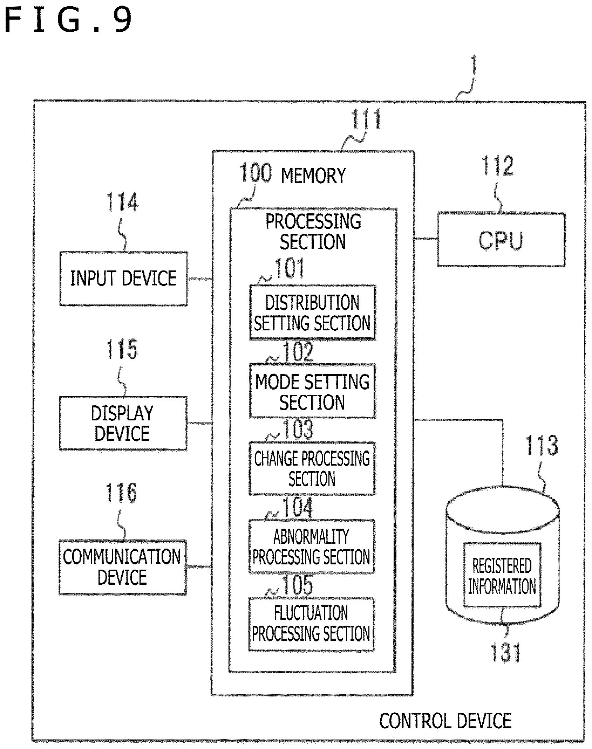

In this case, the control device 1 has the charge voltage for switching the constant-current charging to the constant-voltage charging in registered information 131 (refer to FIG. 9). Furthermore, the control device 1 has information indicating end of the constant-voltage charging (threshold of a current value) in the registered information 131 (refer to FIG. 9). Such information is transmitted as control information from an output section 12 of the control device 1 to the power synthesis/distribution device 2 and the DC/DC converter 4. The power synthesis/distribution device 2 and the DC/DC converter 4 thereby control charging of the electric storage device F.

It is noted that the DC/DC converter 4 exercises similar control even in a case in which the charging method is the constant-voltage charging or the constant-current charging. It is noted that it is necessary to transmit a necessary charging power amount to the control device 1 in a case in which the charging method is the constant-current charging.

It is noted that the control device 1 may automatically acquire information (identification information) related to what type of DC power supply device and what type of electric storage device F are connected via the Internet or the like or an operator may manually input such information to the control device 1.

On the other hand, each DC/AC converter 5 converts direct-current power transmitted from the power synthesis/distribution device 2 into alternating-current power (for example, 100V, 50Hz) to be transmitted to the customer load D and the power system L. At this time, the DC/AC converters 5 desirably generate the alternating-current power in such a manner that alternating-current voltages to be generated are uniform in phase. The phase of the alternating-current voltages to be generated are based on control information from the control device 1. In a case, for example, in which each DC/AC converter 5 has a PWM-controlled inverter circuit, the control information is a duty cycle of a pulse for turning on an IGBT that is not depicted. It is noted that each DC/AC converter 5 is connected to the power synthesis/distribution device 2 and the AC instrument joint JA by DC/AC converter joints J11 and J12, respectively.

It is often predicted that power (referred to as "transfer power" or "system power") of the power system L fluctuates or consumed power (necessary power) of the customer load D fluctuates. In such a case, expected values of these fluctuations are input to the control device 1 via an input section 11 of the control device 1. A processing section 100 of the control device 1 re-computes the power to be supplied to the power system L and the customer load D on the basis of the expected values. This process will be described later.

It is noted that an element such as the electric storage device F, the customer load D, or the power system L connected to the DC/DC converter 4 or the DC/AC converter 5 is often referred to as "instrument." In addition, an element such as the electric storage device F connected to the DC/DC converter 4 is often referred to as "DC instrument," and an element such as the customer load D or the power system L connected to the DC/AC converter 5 is often referred to as "AC instrument."

It is noted herein that each of the electricity supply-demand facilities E1 to En can select one of an AC supply mode for supplying only AC power from the AC instrument joint JA and a DC supply mode for supplying only the DC power from the DC instrument joint JD. Furthermore, each of the electricity supply-demand facilities E1 to En can select an AC/DC supply mode for supplying the AC power from the AC instrument joint JA and supplying the DC power from the DC instrument joint JD. By doing so, it is possible to prevent supply of power to an unnecessary instrument.

It is noted that the internal-combustion power generating devices 3 output different currents at the same voltage. In a case in which the internal-combustion power generating devices 3 output different voltages, then a DC/DC converter may be provided between each internal-combustion power generating device 3 and the power synthesis/distribution device 2, and this DC/DC converter may perform voltage transformation.

It is noted that providing the electricity supply-demand facilities E1 to En enable management based on numbering, as depicted in FIG. 1.

Furthermore, each internal-combustion power generating device 3, each DC/DC converter 4, and each DC/AC converter 5 are removable. The electricity supply-demand facility En from which the internal-combustion power generating device 3, the DC/DC converter 4, and the DC/AC converter 5 are removed also configures the electricity supply-demand system Z.

### (Configuration example 2)

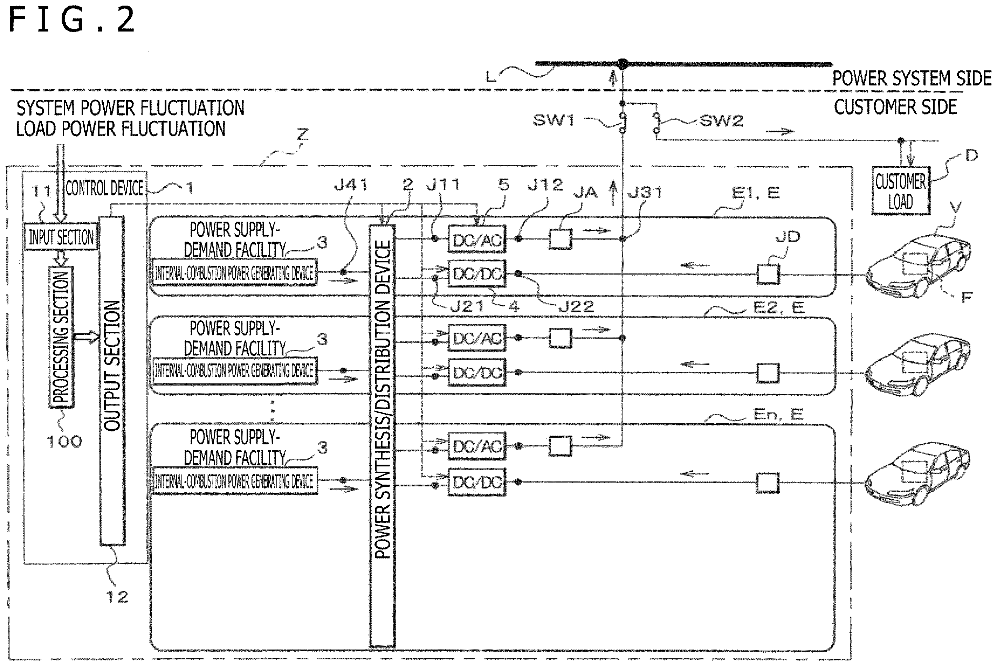

FIG. 2 is a diagram depicting a configuration example (example 2) of the electricity supply-demand system Z according to the present embodiment.

While the DC power generated by each internal-combustion power generating device 3 is charged into the electric storage device F of the vehicle V in the example of FIG. 1, the DC power is supplied from each electric storage device F in the example of FIG. 2. In other words, the electric storage device F is used as the DC power supply device.

The DC power supplied from each electric storage device F is converted into DC power (voltage, current) generated by the internal-combustion power generating device 3 by the DC/DC converter 4 via the DC instrument joint JD, and then input to the power synthesis/distribution device 2. The power synthesis/distribution device 2 synthesizes the DC power input from the internal-combustion power generating devices 3 and the electric storage devices F, and distributes the DC power to the DC/AC converters 5.

In other words, in the example of FIG. 2, the electric storage device F mounted in each vehicle V is also used as one of the DC power supply devices. Examples of such a situation include a case in which power is supplied from the electric storage device F of an electric-powered vehicle or a plug-in hybrid vehicle serving as a power supply due to occurrence of a disaster.

### (Configuration example 3)

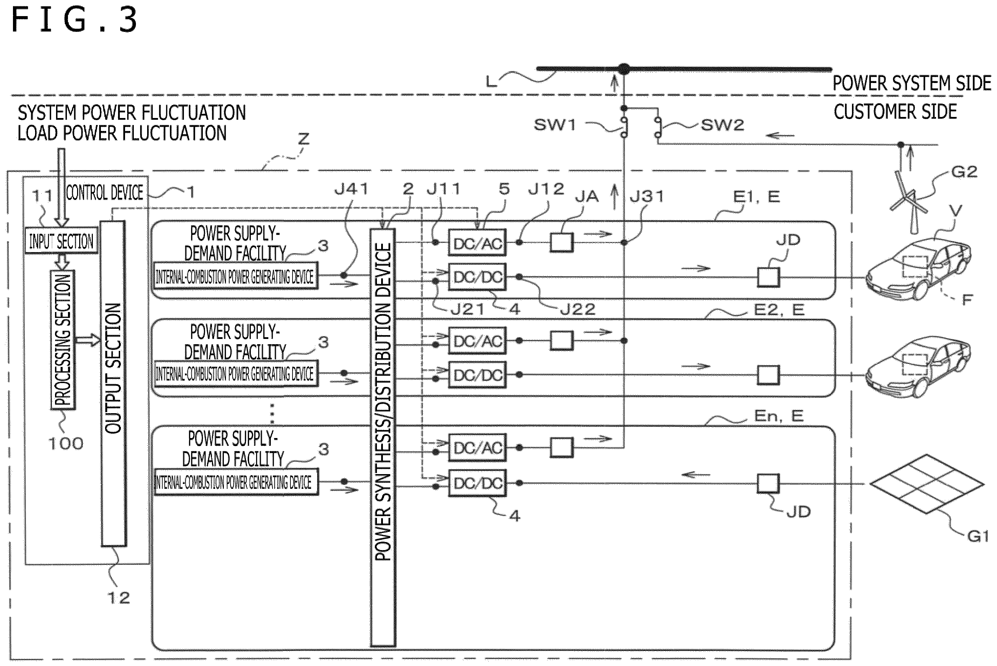

FIG. 3 is a diagram depicting a configuration example (example 3) of the electricity supply-demand system Z according to the present embodiment.

In the example of FIG. 3, a photovoltaic power generating device G1 is connected to the DC instrument joint JD of the electricity supply-demand facility En. In addition, a wind power generating device G2 is connected as an alternative to the customer load D depicted in FIG. 1.

It is noted herein that the photovoltaic power generating device G1 functions as a DC power supply device.

In other words, DC power supplied from the photovoltaic power generating device G1 is input to the DC/DC converter 4. In addition, the DC power is converted into the DC power (voltage, current) generated by the internal-combustion power generating device 3 by the DC/DC converter 4, and then input to the power synthesis/distribution device 2. The power synthesis/distribution device 2 synthesizes the DC power input from the internal-combustion power generating devices 3 and the photovoltaic power generating devices G1, and distributes the DC power to the DC/AC converters 5 and the other DC/DC converters 4.

Furthermore, AC power supplied from the wind power generating device G2 is fed to the power system L via the switch SW2.

It is noted that in the example of FIG. 3, the electricity supply-demand system Z may be configured such that the wind power generating device G2 is installed as an alternative to the photovoltaic power generating device G1 and the photovoltaic power generating device G1 is not provided, or that the photovoltaic power generating device G1 is installed as an alternative to the wind power generating device G2 and the wind power generating device G2 is not provided. Alternatively, the wind power generating device G2 as well as the photovoltaic power generating device G1 may be connected to one of the DC/DC converters 4.

### (Configuration example 4)

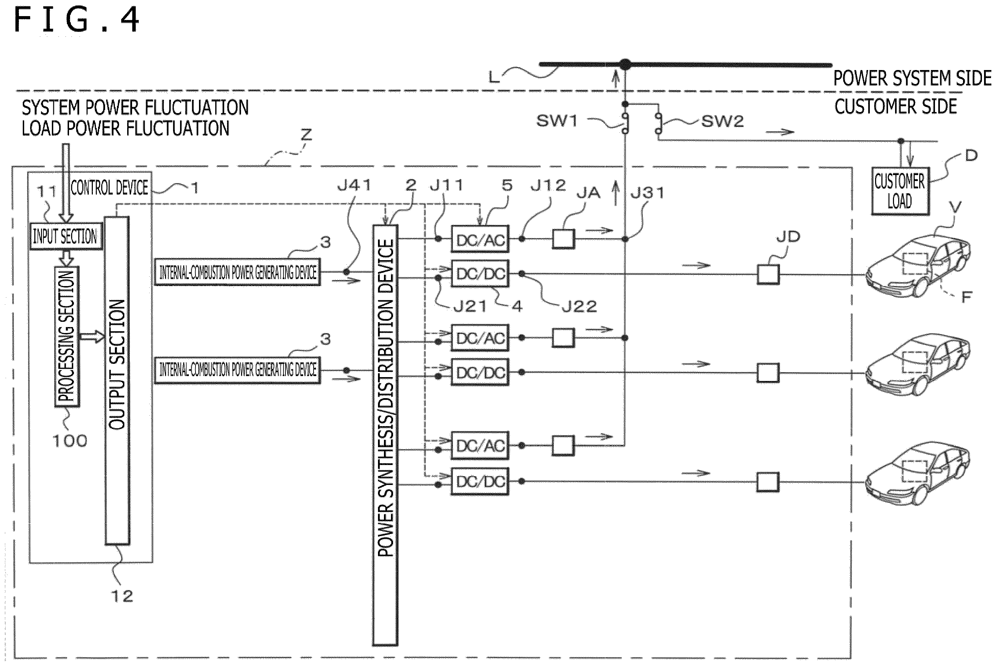

FIG. 4 is a diagram depicting a configuration example (example 4) of the electricity supply-demand system Z according to the present embodiment.

In the example of FIG. 4, an output side configuration of the power synthesis/distribution device 2 is similar to that in the example of FIG. 4, while two internal-combustion power generating devices 3 are connected to an input side of the power synthesis/distribution device 2. Furthermore, the electricity supply-demand facilities E are not provided.

It is noted that in the example of FIG. 4, n numbers of vehicles V and the two internal-combustion power generating devices 3 are connected to the power synthesis/distribution device 2; however, the present invention is not limited to this example. In other words, the present invention is applicable if the number of the internal-combustion power generating devices 3 connected to the power synthesis/distribution device 2 differs from the number of instruments connected to the output side of the power synthesis/distribution device 2.

### (Configuration example 5)

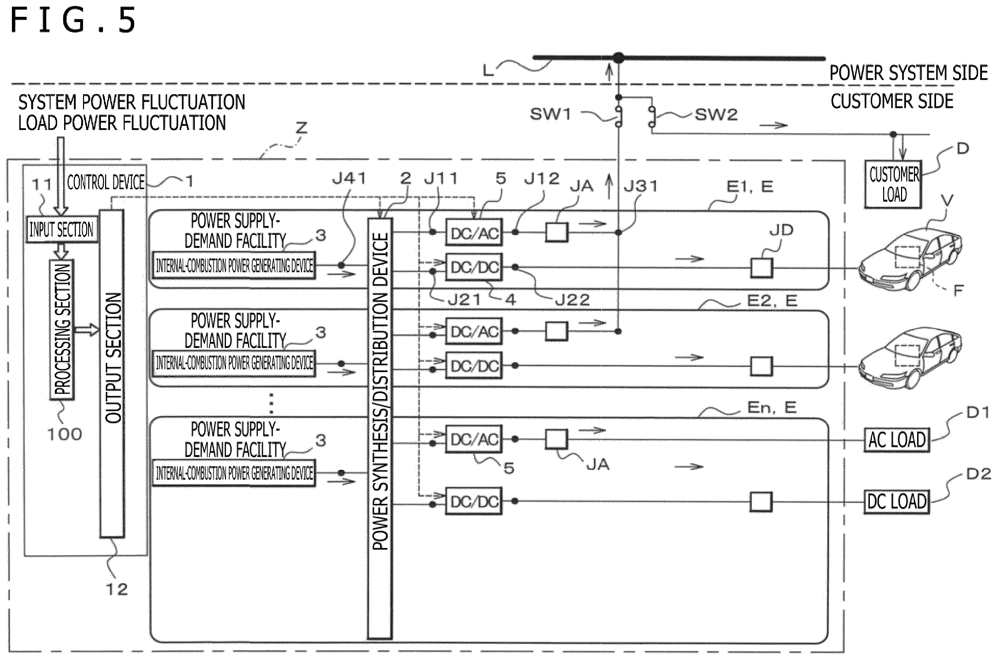

FIG. 5 is a diagram depicting a configuration example (example 5) of the electricity supply-demand system Z according to the present embodiment.

In the example of FIG. 5, an AC load D1 other than the customer load D is connected to the DC/AC converter 5 of the electricity supply-demand facility En via the AC instrument joint JA. Furthermore, a DC load D2 other than the electric storage device F is connected to the DC/DC converter 4 via the DC instrument joint JD of the electricity supply-demand facility En. It is noted that the AC load D1 is contained in an AC instrument and the DC load D2 is contained in an DC instrument.

### (Configuration example 6)

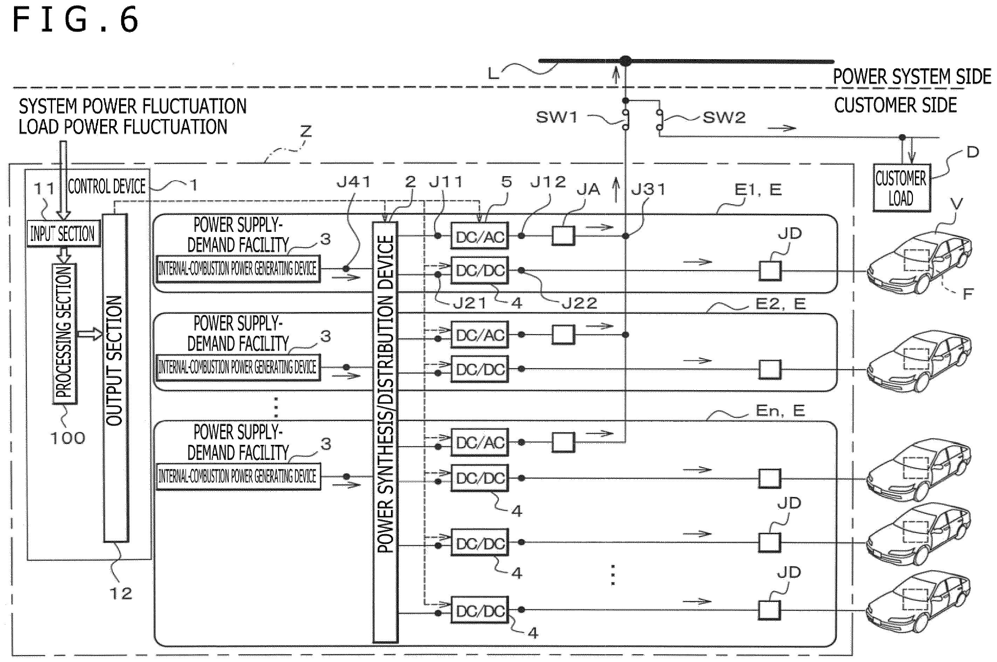

FIG. 6 is a diagram depicting a configuration example (example 6) of the electricity supply-demand system Z according to the present embodiment.

In the example of FIG. 6, a plurality of DC/DC converters 4 and a plurality of DC instrument joints JD are installed in the electricity supply-demand facility En. Furthermore, the vehicles V (electric storage devices F) are connected to the DC instrument joints JD, respectively.

### (Configuration example 7)

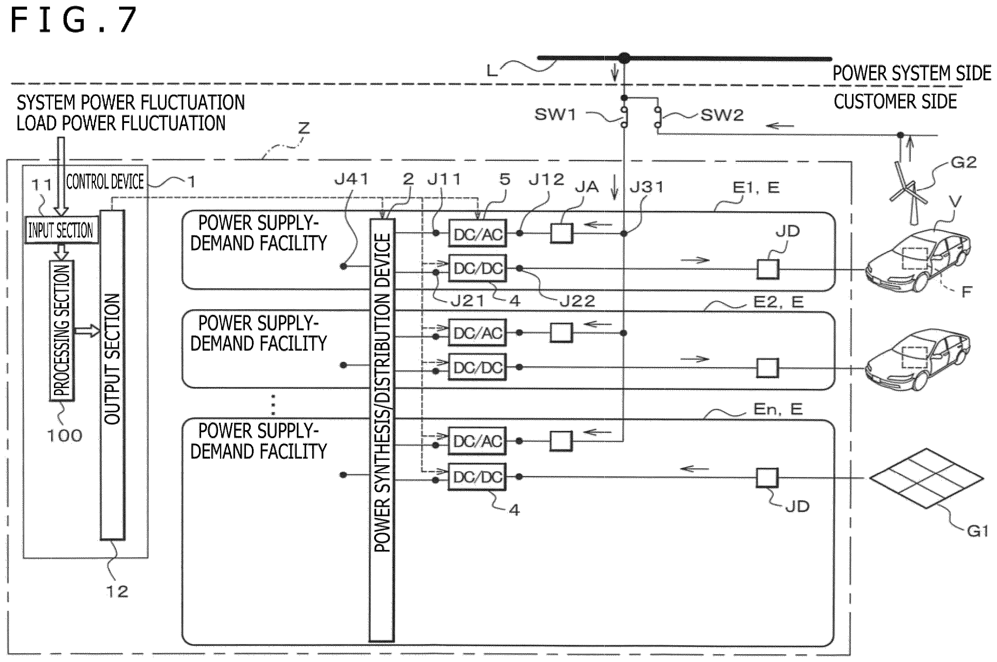

FIG. 7 is a diagram depicting a configuration example (example 7) of the electricity supply-demand system Z according to the present embodiment.

FIG. 7 depicts a case in which the power is supplied from the power system L, the wind power generating device G2, and the photovoltaic power generating device G1 to each electric storage device F.

FIG. 7 differs from FIG. 3 in the following respects.
(1) Each internal-combustion power generating device (DC power supply device) 3 is isolated from the power synthesis/distribution device 2.
(2) Similarly to FIG. 3, the switch SW1 disposed between the electricity supply-demand system Z and the power system L is turned on. Similarly, the switch SW2 disposed between the electricity supply-demand system Z and the wind power generating device G2 is turned on. It is to be noted, however, that the AC power is fed from the power system L and the wind power generating device G2.
(3) The power fed from the power system L and the wind power generating device G2 is converted into desired DC power by the DC/AC converter 5. In addition, after the power is converted into the desired DC power by the DC/DC converter 4, the DC power is supplied to the electric storage device F of each vehicle V and the like via synthesis and distribution by operating the power synthesis/distribution device 2.
(4) In addition, the DC power generated by the photovoltaic power generating device G1 is also synthesized and distributed by the power synthesis/distribution device 2 and fed to each electric storage device F and the like.

By doing so, a DC power supply route of the power system L, that is, the wind power generating device G2 and the photovoltaic power generating device G1 -> the power synthesis/distribution device 2 -> the electric storage devices F, is configured.

It is conceivable that examples of a case of supply and demand of the power as depicted in FIG. 7 include a case in which the DC power is supplied to the electric storage devices F using excess power by, for example, renewable energy of wind power generation or the like. In such a case, it is unnecessary to connect the internal-combustion power generating devices 3 that separately require a fuel to the electricity supply-demand system Z and to operate the internal-combustion power generating device 3. In the example of FIG. 7, therefore, each internal-combustion power generating device 3 is isolated from the power synthesis/distribution device 2.

It is noted that each internal-combustion power generating device 3 may be stopped without being isolated from the power synthesis/distribution device 2. Alternatively, in a case in which only the power supplied from the power line L and the wind power generating device G2 is insufficient, output power from each internal-combustion power generating device 3 may be suppressed without isolating the internal-combustion power generating device 3 from the power synthesis/distribution device 2.

By doing so, it is possible to supply the excess power of the power line L and the wind power generating device G2 of FIG. 7 to the electricity supply-demand system Z. Furthermore, leaving unused (or suppressed in output power) the internal-combustion power generating devices 3 unnecessary to use enables saving of the fuel of the internal-combustion power generating devices 3.

### (Configuration example 8)

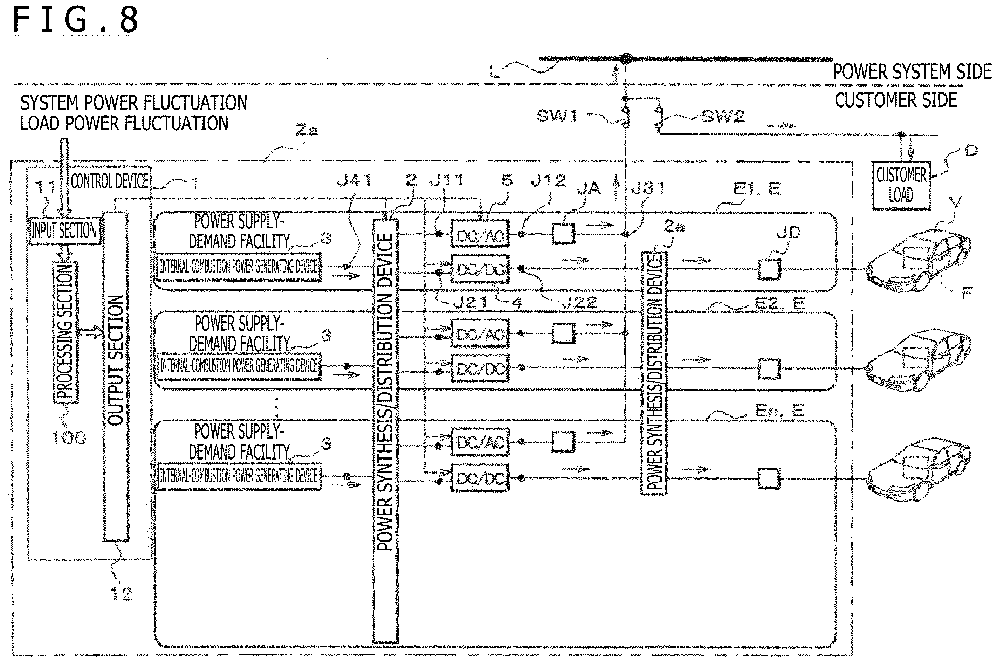

FIG. 8 is a diagram depicting a configuration example (example 8) of an electricity supply-demand system Za according to the present embodiment.

In the example of FIG. 8, a power synthesis/distribution device 2a is installed across the electricity supply-demand facilities E1 to En on an output destination of the DC/DC converters 4. In addition, the DC instrument joints JD are installed on output destinations of the power synthesis/distribution device 2a, respectively. It is noted that in the example of FIG. 8, each DC/DC converter 4 may be installed between the power synthesis/distribution device 2a and each DC instrument joint JD.

In other words, in the example of FIG. 8, the DC power synthesized and distributed once by the power synthesis/distribution device 2 and then distributed and output from each DC/DC converter 4 is synthesized and distributed again by the power synthesis/distribution device 2a.

While the two power synthesis/distribution devices 2 and 2a are installed in the example of FIG. 8, three or more power synthesis/distribution devices may be installed. It is to be noted, however, that the power input to and output from each power synthesis/distribution device 2 is the DC power.

Furthermore, in the example of FIG. 8, all the DC power output from the power synthesis/distribution device 2 is input to the power synthesis/distribution device 2a. However, the present invention is not limited to this example and part of the DC power output from the power synthesis/distribution device 2 may be input to the power synthesis/distribution device 2a.

According to the configuration example of FIG. 8, the power can be synthesized and distributed more minutely. It is noted that the power synthesis/distribution device 2a can be added later to the electricity supply-demand system Z as depicted in FIG. 1.

It is noted that in the configuration examples depicted in FIGS. 1 to 8, part of the configuration of one configuration example can be replaced by the configuration of the other configuration example, and the configuration of the other configuration example can be added to the configuration of one configuration example. Furthermore, for part of the configuration of each configuration example, addition, deletion, and replacement of the other configuration can be made.

A DC instrument may be connected as an alternative to each vehicle V (electric storage device F).

### [Control device 1]

FIG. 9 is a diagram depicting an example of a configuration of the control device 1 according to the present embodiment. Reference is made to FIG. 1, as appropriate.

The control device 1 is a PC (Personal Computer), a PLC (Programmable Logic Controller), or the like.

The control device 1 has a memory 111, a CPU (Central Processing Unit) 112, and a storage device 113 such as an HD (Hard Disk). The control device 1 further has an input device 114 such as a keyboard, a display device 115 such as a display, and a communication device 116 such as an NIC (Network Interface Card). It is noted that the input device 114 corresponds to the input section 11 of FIGS. 1 to 8. In addition, the communication device 116 corresponds to the input section 11 and the output section 12 of FIGS. 1 to 8.

The registered information 131 is stored in the storage device 113. Information about each DC power supply device and each instrument connectable to the power synthesis/distribution device 2 is stored in the registered information 131 in advance in such a manner that the DC power supply device corresponds to identification information about the DC power supply device and the instrument corresponds to identification information about the instrument. Specifically, the information is rated output power or the like of each internal-combustion power generating device 3. Furthermore, in a case in which each instrument is the electric storage device F of constant-current and constant-voltage charging type, a constant current value, a constant voltage value, a charge voltage value for switching to the constant-voltage charging, a current value for ending the constant-voltage charging, and the like are stored in the registered information 131 to correspond to identification information about the electric storage device F.

Having such registered information 131 enables the control device 1 to exercise concentrated control over the electricity supply-demand system Z. This can facilitate managing the control.

A program stored in the storage device 113 is load into the memory 111. In addition, executing the loaded program by the CPU 112 embodies the processing section 100 as well as a distribution setting section 101, a mode setting section 102, a change processing section 103, an abnormality processing section 104, and a fluctuation processing section 105 included in the processing section 100.

The distribution setting section 101 computes the power (distributed power) output (distributed) from each DC/DC converter 4 or each DC/AC converter 5 on the basis of the registered information 131 and the like. In addition, the distribution setting section 101 controls the power synthesis/distribution device 2, each DC/DC converter 4, each DC/AC converter 5, and the like on the basis of the generated distributed power.

The mode setting section 102 switches a supply mode over among the DC supply mode, the AC supply mode, and AC/DC supply mode described above in each of the electricity supply-demand facilities E.

The change processing section 103 re-computes supply and distribution of the power when an instrument (or DC power supply device) changes.

The abnormality processing section 104 re-computes the supply and distribution of the power when an abnormality in a DC power supply devices (or instruments) is detected.

The fluctuation processing section 105 re-computes the supply and distribution of the power when load power of the customer load D fluctuates.

It is noted that processes performed by the distribution setting section 101, the change processing section 103, the abnormality processing section 104, and the fluctuation processing section 105 will be described later.

### [Power synthesis/distribution device 2]

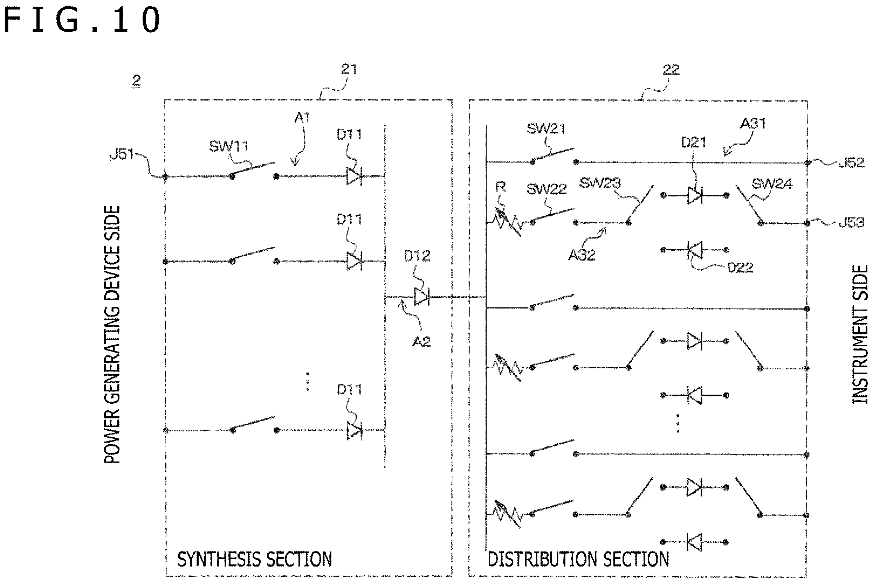

FIG. 10 is a diagram depicting a configuration example of the power synthesis/distribution device 2 used in the present embodiment. Reference is made to FIG. 1, as appropriate.

As depicted in FIG. 10, the power synthesis/distribution device 2 has a synthesis section 21 and a distribution section 22. A plurality of interconnection lines A1 are disposed in parallel in the synthesis section 21. Each interconnection line A1 has a power generating device joint J51, a switch SW1, and a backflow prevention diode D11 in an order from an internal-combustion power generating device (power generating device) 3 side. One internal-combustion power generating device 3 is connected to the power generating device joint J51. The interconnection lines A1 merge into an interconnection line A2. A backflow prevention diode D12 is similarly provided on the interconnection line A2.

It is noted herein that the switch SW11 is a switch for performing connection interruption and the like of each internal-combustion power generating device 3. The connection interruption of the internal-combustion power generating device 3 is performed at a time of, for example, occurrence of an abnormality in the internal-combustion power generating device 3 (details will be described later).

A plurality of AC interconnection lines A31 and a plurality of DC interconnection lines A32 are disposed in parallel in the distribution section 22. Each of the AC interconnection lines A31 and the DC interconnection lines A32 is connected to the interconnection line A2.

Each AC interconnection line A31 has a switch SW21 and an AC joint J52 in the order from the internal-combustion power generating device (power generating device) 3 side. Each DC/AC converter 5 is connected to the AC joint J52. The switch SW21 is a switch for connection/interruption between each DC/AC converter 5 and the power synthesis/distribution device 2.

Further, each DC interconnection line A32 has a variable resistance R, switches SW22 and SW23, backflow prevention diodes D21 and D22, a switch SW24, and a DC joint J53 in the order from the internal-combustion power generating device (power generating device) 3 side.

The variable resistance R on the DC interconnection line A32 is used to control the current supplied to each DC/DC converter 4. In many DC instruments, the current can be determined by an input impedance of each DC/DC converter 4. In a case of the electric storage device F or the like of the constant-current and constant-voltage charging type, however, it is necessary to control the current to be carried. In such a case, making the variable resistance R variable by the control information transmitted from the power synthesis/distribution device 2 enables control over the current carried to each DC/DC converter 4.

The switch SW22 is a switch for connection/interruption between each DC/DC converter 4 and the instrument connected to the DC/DC converter 4.

The switches SW23 and SW24 are switches for switching connection over between the diodes D21 and D22. It is noted herein that the diode D21 is connected at a time of carrying the current to the instrument. At a time of, for example, charging the electric storage device F as depicted in FIG. 1, the diode D21 is connected.

By contrast, the diode D22 is connected when the current is carried from the instrument. For example, in a case of using each electric storage device F as the DC power supply device as depicted in FIG. 2 or in a case of connecting the photovoltaic power generating device G1 in the electricity supply-demand facility En of FIG. 3, the diode D22 is connected.

Each DC/DC converter 4 is connected to the DC joint J53.

It is noted herein that toggle switches, push button switches, relays, or the like are used as the switches SW11 and SW21 to SW24. In a case in which the switches SW11 and SW21 to SW24 are the toggle switches or the push button switches, switching is manually performed. In a case in which the switches SW11 and SW21 to SW24 are the relays, switching can be performed in response to a command from the control device 1. The switches SW11 and SW21 to SW24 are each preferably configured with the relay and used to perform switching in response to a command from the control device 1.

It is noted that the supply mode is switched to the AC supply mode when the switch SW21 is turned on and the switch SW22 is turned off.

Furthermore, the supply mode is switched to the DC supply mode when the switch SW21 is turned off and the switch SW22 is turned on.

Moreover, the supply mode is switched to the AC/DC supply mode when both of the switches SW21 and SW22 are turned on.

As described above, it is preferable that the switches SW21 and SW22 are controlled to be turned on or off by the control device 1 while the operator can manually turn on or off the switches SW21 and SW22.

As obvious from FIG. 10, currents are synthesized in the synthesis section 21 and a current is distributed in the distribution section 22.

### [Flowchart]

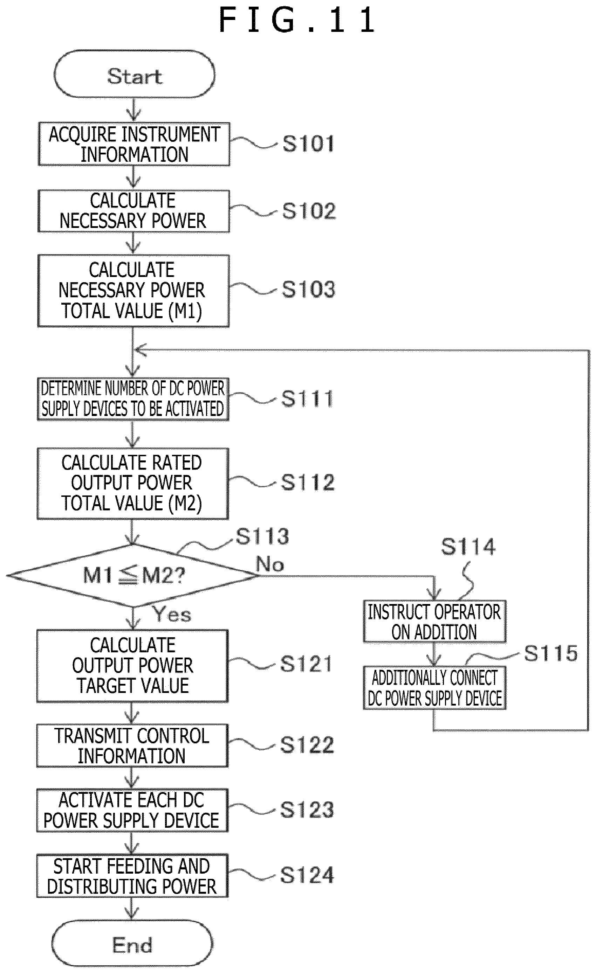

Processes performed by the electricity supply-demand system Z of the present embodiment will next be described with reference to FIGS. 11 to 14. Reference is made to FIGS. 9 and 10, as appropriate.

### (Initial time)

FIG. 11 is a flowchart depicting process procedures performed by the electricity supply-demand system Z at an initial time (at a time of installing devices).

First, the distribution setting section 101 of the control device 1 acquires identification information (instrument information) about each of the instruments connected to the AC instrument joints JA and the DC instrument joints JD (S101). It is noted that as described above, the instruments include not only each electric storage device F of FIG. 1 but also the power system L, the customer load D, the AC load D1 and the DC load D2 depicted in FIG. 5, and the like.

Next, the distribution setting section 101 of the control device 1 computes necessary power that is the power necessary for each instrument on the basis of the acquired identification information (S102). Specifically, the distribution setting section 101 computes the necessary power for each instrument on the basis of the registered information 131 about each instrument stored in the storage device 113 of the control device 1 and the identification information about each currently connected instrument. For example, in a case in which the instrument is each electric storage device F of the constant-current constant-voltage charging type, the constant current value, the constant voltage value, the charge voltage value for switching to the constant-voltage charging, time of performing the constant-voltage charging, and the like are stored in the registered information 131. The distribution setting section 101 computes the necessary power at each time on the basis of these pieces of information.

The distribution setting section 101 then computes a necessary power total value (M1) that is a total value of the necessary power (S103). It is noted that in a case in which the necessary power changes over time such as that of the electric storage device F of the constant-current constant-voltage charging type, the distribution setting section 101 computes the necessary power total value (M1) on the basis of a maximum value of the necessary power.

In other words, the distribution setting section 101 computes a total value of AC necessary power necessary for each AC instrument. Furthermore, the distribution setting section 101 computes a total value of DC necessary power necessary for each DC instrument. The distribution setting section 101 then computes a sum of the total value of the AC necessary power and the total value of the DC necessary power as the necessary power total value (M1).

Subsequently, the distribution setting section 101 determines the number of DC power supply devices to be activated on the basis of the necessary power total value (M1) (S111), and computes a rated output power total value (M2) of the DC power supply devices to be used (S112). At this time, the distribution setting section 101 may determine the DC power supply devices to be activated and the number of the DC power supply devices so that the rated output power total value (M2) is as close to the necessary power total value (M1) as possible. By doing so, it is possible to suppress generation of unnecessary power.

The distribution setting section 101 then determines whether the rated output power total value (M2) computed in Step S112 is equal to or greater than the necessary power total value (M1) computed in Step S103 (M1 ≤ M2) (S113).

In a case in which the necessary power total value (M1) is greater than the rated output power total value (M2) as a result of Step S113 (S113 -> No), the distribution setting section 101 instructs the operator (user) to add a DC power supply device (S114). This instruction (notification) is made by, for example, displaying the necessary power and the like on the display device 115 of the control device 1 or the like.

The operator then additionally connects the DC power supply device (which is specifically the internal-combustion power generating device 3) (S115).

Subsequently, the distribution setting section 101 returns the process to S111, re-determines the DC power supply devices to be activated and the number of DC power supply devices, and recomputes the rated output power total value (M2).

By doing so, it is possible to prevent a shortfall in supplied power.

In a case in which the rated output power total value (M2) is equal to or greater than the necessary power total value (M1) as a result of Step S113 (S113 -> Yes), the distribution setting section 101 computes an output power target value of each DC power supply device (S121). The distribution setting section 101 herein computes the output power target value of each DC power supply device on the basis of rated output power information about each DC power supply device stored in the registered information 131. Since, in general, the output power of the DC power supply device = rated output power, the distribution setting section 101 determines allocation of the power to the DC power supply devices in Step S121. It is noted, however, that in a case of the DC power supply device the output power of which can be made variable, the output power of the DC power supply device can be determined so that the output power is coincident with or closer to the output power target value.

Subsequently, the distribution setting section 101 transmits the control information to the power synthesis/distribution device **2,** each DC/DC converter 4, and each DC/AC converter 5 (S122). Current information, voltage transformation information, and the like are stored in the control information.

Next, each DC power supply device is activated (S123). Feeding and distribution of the power is thereby started (S124).

In Step S124, the following processes are performed.
(1) A DC power synthesis step in which the power synthesis/distribution device 2 synthesizes the DC power input from the DC power supply devices (internal-combustion power generating devices 3 and the like).
(2) An AC power distribution step in which the power synthesis/distribution device 2 distributes the synthesized DC power to the DC/AC converters 5 to which the AC instruments are connected on the basis of the power necessary for each AC instrument.
(3) A DC power distribution step in which the power synthesis/distribution device 2 distributes the synthesized DC power to each DC/DC converter 4 to which the power synthesis/distribution device 2 and each of the DC instruments are connected on the basis of the power necessary for each DC instrument.

The DC power supply devices may be activated either manually or by the control device 1. Furthermore, before activation of the DC power supply devices, the switch SW11 of FIG. 10 (as well as the switches SW22 to SW24 as needed) is turned on or off, thereby establishing connection to the power synthesis/distribution device 2.

It is noted that in FIG. 11, in a case in which the rated output power total value (M2) of the DC power supply devices is smaller than the necessary power total value (M1), the distribution setting section 101 recomputes the rated output power total value (M2) of the DC power supply devices (combination of the DC power supply devices). However, the present invention is not limited to this example and the distribution setting section 101 may recomputes the rated output power total value (M2) of the DC power supply devices (combination of the DC power supply devices) even in a case in which the rated output power total value (M2) of the DC power supply devices exceeds the necessary power total value (M1). In other words, the distribution setting section 101 may recompute a combination of the DC power supply devices until the rated output power total value (M2) of the DC power supply devices is equal to the same value as that when the rated output power total value (M2) does not exceed the necessary power total value (M1).

### (Time of change in instrument)

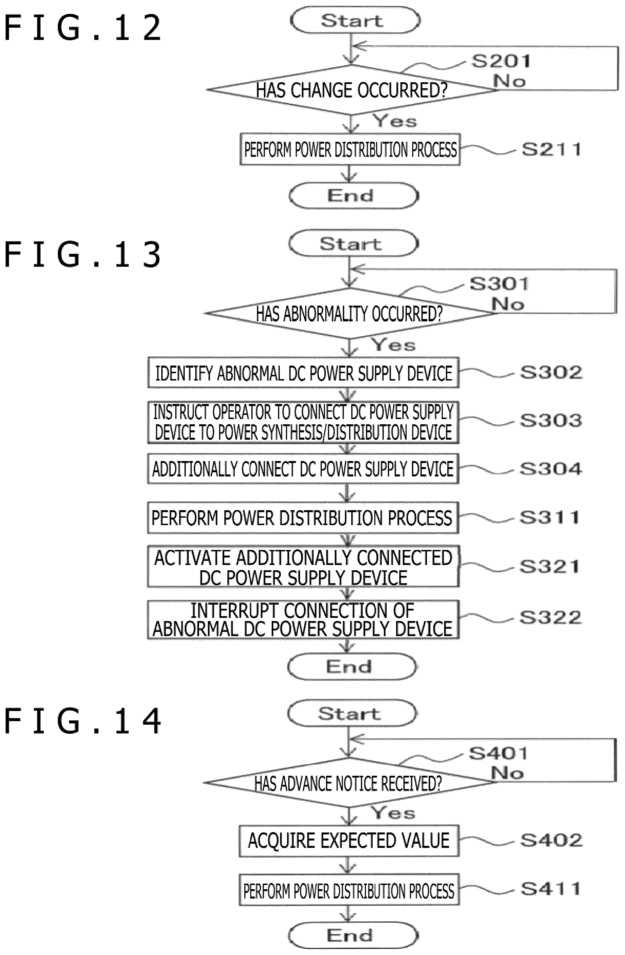

FIG. 12 is a flowchart depicting process procedures performed by the electricity supply-demand system Z when an instrument connected to a DC instrument joint JD changes. It is noted that supply of power by each DC power supply device is not stopped during a process of FIG. 12.

First, the change processing section 103 of the control device 1 determines whether a change in the instrument connected to each DC device joint JD has occurred (S201). Whether occurrence of the change in the instrument is detected by acquiring the identification information about each instrument by the change processing section 103.

In a case of no change in the instrument as a result of Step S201 (S201 -> No), the change processing section 103 returns the process to Step S201.

In a case of change in the instrument as a result of Step S201 (S201 -> Yes), the change processing section 103 performs a power distribution process (S211). Since the power distribution process is similar to the process in Steps S101 to S124 of FIG. 11, description thereof will be omitted. It is noted that supply of power is not stopped during the process of FIG. 12.

It is noted that the change processing section 103 stops an unnecessary DC power supply device (internal-combustion power generating device 3) in a case in which the unnecessary DC power supply device is present due to occurrence of the change in instrument.

While the case of occurrence of the change in instrument is described herein, a case of a change in DC power supply device can be handled by causing the abnormality processing section 104 to perform a similar process.

By performing the process depicted in FIG. 12, it is possible to change instruments without stopping the supply of power even in a case of occurrence of the change in instrument.

### (Time of occurrence of abnormality in DC power supply device)

FIG. 13 is a flowchart depicting process procedures performed by the electricity supply-demand system Z when an abnormality occurs in a DC power supply device. It is noted that the supply of power by each DC power supply device is not stopped during a process of FIG. 13.

The abnormality processing section 104 of the control device 1 determines whether an abnormality has occurred in any of the DC power supply devices (S301). Abnormality of the DC power supply device is detected by, for example, detecting an abnormal current degradation of the DC power supply device.

In a case in which an abnormality has not occurred in any of the DC power supply devices as a result of Step S301 (S301 -> No), the abnormality processing section 104 returns the process to Step S301.

In a case in which an abnormality in any of the DC power supply devices has been detected as a result of Step S301 (S301 -> Yes), the abnormality processing section 104 identifies the DC power supply device in which the abnormality occurs (S302).

Subsequently, the abnormality processing section 104 instructs the operator to connect the DC power supply device (internal-combustion power generating device 3), which has the rated output power equal to or higher than that of the DC power supply device in which the abnormality occurs, to the power synthesis/distribution device 2 (S303). In other words, the abnormality processing section 104 notifies the operator to replace the DC power supply device from which the abnormality has been detected by a normal DC power supply device.

At this time, the abnormality processing section 104 may display the rated output power of the DC power supply device in which the abnormality occurs on the display device 115.

The operator additionally connects the DC power supply device having the rated output power equal to or higher than that of the DC power supply device in which the abnormality occurs (S304). It is noted that the number of DC power supply devices to be additionally connected is not limited to one and a plurality of DC power supply devices may have the rated output power equal to or higher than that of the DC power supply device in which the abnormality occurs.

Subsequently, the abnormality processing section 104 performs the power distribution process (S311). Since the power distribution process is similar to the process in Steps S101 to S121 of FIG. 11, description thereof will be omitted.

Subsequently, the additionally connected DC power supply device is connected by the switch SW11 of FIG. 10 (as well as the switch SW22 according to circumstances), and the additionally connected DC power supply device is activated (S321).

In addition, turning off the switch SW11 (as well as the switch SW22 according to circumstances) connected to the DC power supply device in which the abnormality occurs causes interruption of connection of the DC power supply device in which the abnormality occurs (S322). As described above, it is preferable that the switch SW11 (switch SW22) is turned on or off by the abnormality processing section 104 while the operator may manually turn on or off the switch SW11 (switch SW22).

While the case of occurrence of the abnormality in the DC power supply device is described herein, a case of occurrence of an abnormality in an instrument can be handled by causing the abnormality processing section 104 to perform a similar process.

In this way, the abnormality processing section 104 recomputes the supply and distribution of the power at the time of occurrence of an abnormality in the DC power supply device.

According to the process of FIG. 13, it is possible to replace the DC power supply device in which the abnormality has occurred without stopping the currently connected DC power supply devices and instruments. In other words, it is possible to replace the DC power supply device in which the abnormality has occurred without affecting the DC power supply devices and instruments other than the DC power supply device in which the abnormality has occurred.

### (Fluctuation in system power or load power)

FIG. 14 is a flowchart depicting process procedures performed by the electricity supply-demand system Z when a fluctuation occurs in system power or load power (consumed power of the customer load D).

First, the fluctuation processing section 105 of the control device 1 determines whether an advance notice of a fluctuation in the system power or the load power has been received (S401). Examples of the advance notice of a fluctuation include an advance notice to the effect that in how many minutes the system power or the load power changes. To take an example, it is expected up to what °C at what time a temperature rises and a usage rate of air conditioners rises in summer, so that a fluctuation in the system power is expected.

Alternatively, in a case of the example of FIG. 3, it is expected that wind abates in an installation location of the wind power generating device G2, so that it is expected that the power supplied from the wind power generating device G2 decreases.

In a case in which the advance notice has not been received as a result of Step S401 (S401 -> No), the fluctuation processing section 105 returns the process to Step S401.

In a case in which the advance notice has been received as a result of Step S401 (S401 -> Yes), the fluctuation processing section 105 acquires an expected value from the system power or the customer load D (S402). In the example in which the usage rate of air conditioners rises in summer described above, how much power is expected to be necessary from past experience is acquired as the expected value.

Alternatively, in the case of the example of FIG. 3, information to the effect that down to what m/s wind power weakens in the installation location of the wind power generating device G2, so that how the power decreases is acquired as the expected value.

Such an expected value is transmitted to the control device 1 via the Internet or the like.

Subsequently, the fluctuation processing section 105 performs the power distribution process (S411). Since the power distribution process is similar to the process in Steps S101 to S124 of FIG. 11, description thereof will be omitted.

The present embodiment is characterized in that synthesis and distribution are performed on the basis of the DC power. This makes it possible to facilitate synthesizing and distributing the power.

Furthermore, in the present embodiment, the DC power distributed and output from the power synthesis/distribution device 2 is subjected to voltage transformation by each DC/DC converter 4 or converted into the AC power by each DC/AC converter 5. It is thereby possible to connect both the DC instruments and the AC instruments.

Furthermore, it is expected that the number of electric-powered vehicles and/or plug-in hybrid vehicles considerably increases in the future. Owing to this, it is expected that an infrastructure system having distributed power supplies (internal-combustion power generating devices 3) and the electric storage devices F is necessary. In the present embodiment, it is estimated each internal-combustion power generating device 3 (power generation) and each electric storage device F (both of a power generation function and a load function) as one system. Moreover, it is expected that it is necessary to achieve extendibility of a system capacity, adjusting power, and improved efficiency.

According to the present embodiment, providing the power synthesis/distribution device 2, each DC/DC converter 4, and each DC/AC converter 5 makes it possible to improve a degree of freedom of a combination of the DC power supply devices and the instruments.

Furthermore, according to the present embodiment, the DC load D2 can be connected to the DC instrument joint JD as an alternative to the electric storage device F, or the AC load D1 can be connected to the AC instrument joint JA as depicted in FIG. 5. Moreover, providing each DC/DC converter 4 and each DC/AC converter 5 makes it possible to transform the voltage in response to the DC load D2 connected to the DC instrument joint JD, the AC load D1, or the like. In this way, the electricity supply-demand system Z of the present embodiment can easily change a use application.

Furthermore, it is possible to easily switch over between the supply of power to the electric storage device F of each electric-powered vehicle or plug-in hybrid vehicle as depicted in FIG. 1 and the supply of power from the electric storage device F at time of emergency as depicted in FIG. 2.

Moreover, according to the present embodiment, it is possible to flexibly supply the power in light of a quantity demanded in a specific controlled region.

Furthermore, setting the output power target value to each DC power supply device facilitates managing the DC power supply device.

Moreover, using each internal-combustion power generating device 3 as one of the DC power supply devices makes the supply of the DC power convenient and easy.

Furthermore, adjusting power is necessary for relaxing a supply-side power fluctuation by renewable energy, a demand-side power fluctuation by boost chargers, and the like.

According to the present embodiment, performing the process of FIG. 14 makes it possible to supply backup power of the wind power generation or the like even in a case, for example, in which a fluctuation or the like occurs in a power generation amount of the wind power generating device G2 or the like supplying the power to the power system L. In other words, it is possible to compensate for the supply of power for stable electricity supply to an electricity system using the renewable energy.

Furthermore, the control device 1 may perform the processes of FIGS. 11 to 14 in each of the DC supply mode, the AC/DC supply mode, and the AC/DC supply mode described above. Needless to say, the control device 1 calculates the necessary power only for each of the DC instruments in the DC supply mode, calculates the necessary power only for each of the AC instruments in the AC supply mode, and calculates the necessary power for each of the DC instruments and the AC instruments in the AC/DC supply mode, and performs distribution of the power.

Moreover, a fuel cell, an AC power generating device + an AC/DC converter, or the like may be used as an alternative to each internal-combustion power generating device 3 in the present embodiment.

The present invention is not limited to the embodiment described above but encompasses various modifications. For example, the above embodiment has been described in detail for describing the present invention so that the present invention is easy to understand. The present invention is not always limited to what has all the configurations described so far.

Furthermore, the configurations, the functions, the processing sections 100 to 105, the storage device 113, and the like described above may be realized by hardware by, for example, designing part or all thereof with integrated circuits. Moreover, as depicted in FIG. 9, the configurations, the functions, and the like described above may be realized by software by causing a processor such as the CPU 112 to interpret and execute programs that realize the functions. Information in programs, tables, files, and the like for realizing the functions can be stored in a storage device such as the memory 111 or an SSD (Solid State Drive), or in a recording medium such as an IC (Integrated Circuit) card, an SD (Secure Digital) card, or a DVD (Digital Versatile Disc).

Moreover, in each embodiment, control lines or information lines considered to be necessary for the description are illustrated and all the control lines or the information lines are not always illustrated in terms of a product. In actuality, it may be assumed that almost all the configurations are mutually connected.

### Description of Reference Characters

1: Control device
2, 2a: Power synthesis/distribution device
3: Internal-combustion power generating device (DC power supply device)
4: DC/DC converter
5: DC/AC converter
100: Processing section
101: Distribution setting section
102: Mode setting section
103: Change processing section
104: Abnormality processing section
105: Fluctuation processing section
131: Registered information
F: Electric storage device (instrument, DC instrument, DC power supply device)
D: Customer load (instrument, AC instrument)
D1: AC load (instrument, AC instrument)
D2: DC load (instrument, DC instrument)
G1: Photovoltaic power generating device (DC power supply device)
G2: Wind power generating device
J11, J12: DC/AC converter joint
J21, J22: DC/DC converter joint
J41: DC power supply device joint
JA: AC instrument joint
JD: DC instrument joint

## Claims

1. An electricity supply-demand system (Z), comprising:
a plurality of DC power supply device joints (J41) for connecting DC power supply devices (3) configured to supply DC power;
a power synthesis/distribution device (2) connected to the DC power supply device joints (J41), for synthesizing the DC power input from the DC power supply device joints (J41), and for distributing the synthesized DC power;
at least one DC/AC converter joint (J11, J12) configured to connect a DC/AC converter (5) to the power synthesis/distribution device (2);
at least one DC/DC converter joint (J21, J22) that connects a DC/DC converter (4) to the power synthesis/distribution device (2);
at least one AC instrument joint (JA), which is connected to the DC/AC converter (5) via the DC/AC converter joint (J12), AC instruments being connected to the at least one AC instrument joint (JA);
at least one DC instrument joint (JD), which is connected to the DC/DC converter (4) via the DC/DC converter joint (J22), DC instruments being connected to the at least one DC/DC converter joint (J22); and
a control device (1) is configured to compute and determine a number of the DC power supply devices (3) to be activated in such a manner that a power amount is as close as possible to a necessary power total value for an instrument connected to at least one of the DC instrument joint (JD) and the AC instrument joint (JA) in a case of a change in the connected instrument, and is further configured to exercise control over synthesis of the DC power and distribution of the DC power to the AC instrument joint (JA) and the DC instrument joint (JD) by controlling at least one of the power synthesis/distribution device (2), the DC/AC converter (5), and the DC/DC converter (4), and is further configured to supply necessary power necessary for instruments connected to at least one of the AC instrument joint (JA) and the DC instrument joint (JD) without stopping supplying the necessary power, **characterized in that**:
the power synthesis/distribution device (2)
includes a first diode section installed in such a manner that a direction of a current from each of the DC power supply device joints (J41) to the power synthesis/distribution device (2) is a forward direction; and a first switch section for performing interruption of connection of each of the DC power supply devices (3) or the connection of each of the DC power supply devices (3), the first diode section and the first switch section being provided to correspond to each of the DC power supply device joints (J41),
includes a second diode section installed in such a manner that a direction of a current from the power synthesis/distribution device (2) to each of the DC instrument joints (JD) is the forward direction, a third diode section installed in such a manner that the direction of the current from each of the DC instrument joints (JD) to the power synthesis/distribution device (2) is the forward direction; a second switch section for performing switchover between the second diode section and the third diode section and performing interruption of connection of the DC instruments or the connection of the DC instruments, and a variable resistance section, the second diode section, the third diode section, the second switch section, and the variable resistance section being provided to correspond to each of the DC instrument joints (JD), and
includes a third switch section for performing interruption of connection of the AC instruments or the connection of the AC instruments, the third switch section being provided to correspond to each of the AC instrument joints (JA), and
the power synthesis/distribution device (2) is configured to, after all interconnection lines corresponding to the DC power supply device joints (J41) are merged into one, arrange the one interconnection line to be distributed to interconnection lines corresponding to the DC instrument joint (JD) and the AC instrument joint (JA).

2. A control device (1) for controlling an electricity supply-demand system (Z), the electricity supply-demand system comprising:
a plurality of DC power supply devices (3);
a power synthesis/distribution device (2) that is connected to each of the DC power supply devices, configured to synthesize DC power input from the DC power supply devices (3), and to distibute the synthesized DC power;
at least one DC/AC converter (5) and at least one DC/DC converter (4) connected to the power synthesis/distribution device (2);
at least one AC instrument joint (JA) connected to the DC/AC converter (5), AC instruments being connected to the at least one AC instrument joint;
at least one DC instrument joint (JD) connected to the DC/DC converter (4), DC instruments being connected to the at least one DC instrument joint,
the control device (1) being configured to compute and determine a number of the DC power supply devices to be activated in such a manner that a power amount is as close as possible to a necessary power total value for an instrument connected to at least one of the DC instrument joint (JD) and the AC instrument joint (JA) in a case of a change in the connected instrument, the control device (1) including a processing section configured to exercise control over synthesis of the DC power and distribution of the DC power to the AC instrument joint (JA) and the DC instrument joint (JD) by controlling at least one of the power synthesis/distribution device (2), the DC/AC converter (5), and the DC/DC converter (4), and is further configured to supply necessary power necessary for an instrument connected to at least one of the AC instrument joint (JA) and the DC instrument joint (JD) without stopping supplying the necessary power, **characterized in that**:
the power synthesis/distribution device (2) includes a first diode section installed in such a manner that a direction of a current from each of the DC power supply device joints (J41) from the DC power supply devices (3) to the power synthesis/distribution device (2) is a forward direction; and a first switch section for performing interruption of connection of each of the DC power supply devices (3) or the connection of each of the DC power supply devices (3), the first diode section and the first switch section being provided to correspond to each of the DC power supply device joints (J41),
includes a second diode section installed in such a manner that a direction of a current from the power synthesis/distribution device (2) to each of the DC instrument joints (JD) is the forward direction, a third diode section installed in such a manner that the direction of the current from each of the DC instrument joints (JD) to the power synthesis/distribution device (2) is the forward direction; a second switch section for performing switchover between the second diode section and the third diode section and performing interruption of connection of the DC instruments or the connection of the DC instruments, and a variable resistance section, the second diode section, the third diode section, the second switch section, and the variable resistance section being provided to correspond to each of the DC instrument joints (JD), and
includes a third switch section for performing interruption of connection of the AC instruments or the connection of the AC instruments, the third switch section being provided to correspond to each of the AC instrument joints (JA), and
the control device (1) is configured to operate the power synthesis/ distribution device (2) to, after all interconnection lines corresponding to the DC power supply device joints (J41) are merged into one, to arrange the one interconnection line to be distributed to interconnection lines corresponding to the DC instrument joint (JD) and the AC instrument joint (JA).

3. The control device according to claim 2, comprising
a mode setting section configured to execute:
an AC supply mode for operating the power synthesis/distribution device (2), supplying the DC power to the DC/AC converter (5), and supplying only output power of the DC/AC converter via the AC instrument joint (JA);
an AC/DC supply mode for operating the power synthesis/distribution device (2), supplying the DC power to the DC/AC converter (5), and supplying the output power of the DC/AC converter via the AC instrument joint; and operating the power synthesis/distribution device (2), supplying the DC power to the DC/DC converter (4), and simultaneously supplying output power of the DC/DC converter via the DC instrument joint; and
a DC supply mode for operating the power synthesis/distribution device (2), supplying the DC power to the DC/DC converter (4), and supplying only the output power of the DC/DC converter via the DC instrument joint.

4. The control device according to claim 2, wherein
the processing section is configured to set an output power target value of each of the DC power supply devices (3).

5. An electricity supply-demand method for an electricity supply-demand system (Z), including:
a plurality of DC power supply devices (3),
a power synthesis/distribution device (2) that is connected to each of the DC power supply devices (3), that synthesizes DC power input from the DC power supply devices (3), and that distributes the synthesized DC power,
at least one DC/AC converter (5) and at least one DC/DC converter (4) connected to the power synthesis/distribution device (2),
at least one AC instrument joint (JA) connected to the DC/AC converter (5), AC instruments being connected to the at least one AC instrument joint (JA),
at least one DC instrument joint (JD) connected to the DC/DC converter (4), DC instruments being connected to the at least one DC instrument joint (JD), and
a control device (1) that exercises control over synthesis of the DC power and distribution of the DC power to the AC instrument joint (JA) and the DC instrument joint (JD) by controlling at least one of the power synthesis/distribution device (2), the DC/AC converter (5), and the DC/DC converter (4), the method comprising:
a DC power supply device determining step of computing a total value that is a sum of power necessary for the AC instruments connected to the AC instrument joint (JA) and power necessary for the DC instruments connected to the DC instrument joint (JD) in a case of an instrument connected to at least one of the DC instrument joint (JD) and the AC instrument joint (JA) is changed and determining a number of the DC power supply devices (3) to be activated and the DC power supply devices (3) to be activated in such a manner that a power amount is as similar as possible to the total value;
an output power target value computing step of computing an output power target value of each of the DC power supply devices (3);
a DC power supply device activating step of activating the DC power supply devices (3) determined in the DC power supply device determining step;
a DC power synthesizing step of generating synthesized DC power by causing the power synthesis/distribution device (2) to synthesize the DC power supplied from the DC power supply devices (3);
an AC power distributing step of distributing the synthesized DC power to the DC/AC converter (5) to which the AC instruments are connected, on a basis of the power necessary for the AC instruments; and
a DC power distributing step of distributing the synthesized DC power to the DC/DC converter (4) to which the DC instruments are connected on a basis of the power necessary for the DC instruments, wherein
the electricity supply-demand system (Z) executes the steps to thereby exercise control over the synthesis of the DC power and the distribution of the DC power to the AC instrument joint (JA) and the DC instrument joint (JD), and supplies necessary power necessary for instruments connected to the AC instrument joint (JA) and the DC instrument joint (JD) without stopping supplying the necessary power, **characterized in that**:
an addition notifying step of notifying a user to additionally connect the DC power supply device is performed in a case in which the total value exceeds a rated output power total value of the DC power supply devices (3), and
the output power target value computing step is performed when the DC power supply device is additionally connected.

6. The electricity supply-demand method according to claim 5, wherein the electricity supply-demand device executes:
a monitoring step of monitoring operational statuses of the DC power supply devices (3);
a notifying step of, in a case of detecting an abnormality in any of the DC power supply devices (3), notifying a user to replace the DC power supply device in which the abnormality is detected by the normal DC power supply device in a state of continuing supplying power; and
a recomputing step of recomputing the output power target value of each of the DC power supply devices (3) upon connection of the normal DC power supply device.

7. The electricity supply-demand method according to claim 5, wherein the electricity supply-demand device executes:
a fluctuation expected value acquiring step of acquiring an expected value of a fluctuation in a power system; and
a recomputing step of recomputing the output power target value of each of the DC power supply devices (3) on a basis of the expected value.

## Patentansprüche

1. Elektrizitätseinspeisungs-Anforderungssystem (Z), das Folgendes umfasst:
mehrere DC-Stromversorgungsvorrichtungs-Anschlüsse (J41) zum Verbinden von DC-Stromversorgungsvorrichtungen (3), die konfiguriert sind, DC-Leistung einzuspeisen;
eine Leistungs-Synthese/Verteilungs-Vorrichtung (2), die zum Synthetisieren der DC-Leistung, die von den DC-Stromversorgungsvorrichtungs-Anschlüssen (J41) eingegeben wird, und zum Verteilen der synthetisierten DC-Leistung mit den DC-Stromversorgungsvorrichtungs-Anschlüssen (J41) verbunden ist;
mindestens einen DC/AC-Umsetzer-Anschluss (J11, J12), der konfiguriert ist, einen DC/AC-Umsetzer (5) mit der Leistungs-Synthese/Verteilungs-Vorrichtung (2) zu verbinden;
mindestens einen DC/DC-Umsetzer-Anschluss (J21, J22), der einen DC/DC-Umsetzer (4) mit der Leistungs-Synthese/Verteilungs-Vorrichtung (2) verbindet;
mindestens einen AC-Instrumentenanschluss (JA), der über den DC/AC-Umsetzer-Anschluss (J12) mit dem DC/AC-Umsetzer (5) verbunden ist, wobei AC-Instrumente mit dem mindestens einen AC-Instrumentenanschluss (JA) verbunden sind;
mindestens einen DC-Instrumentenanschluss (JD), der über den DC/DC-Umsetzer-Anschluss (J22) mit dem DC/DC-Umsetzer (4) verbunden ist, wobei DC-Instrumente mit dem mindestens einen DC/DC-Umsetzer-Anschluss (J22) verbunden sind; und
eine Steuervorrichtung (1), die konfiguriert ist, im Fall einer Änderung des verbundenen Instruments eine Anzahl der zu aktivierenden DC-Stromversorgungsvorrichtungen (3) so zu berechnen und zu bestimmen, dass ein Leistungsbetrag so nahe wie möglich an einem notwendigen Leistungsgesamtwert für ein Instrument, das mit dem DC-Instrumentenanschluss (JD) und/oder dem AC-Instrumentenanschluss (JA) verbunden ist, liegt, und ferner konfiguriert ist, durch Steuern der Leistungs-Synthese/Verteilungs-Vorrichtung (2) und/oder des DC/AC-Umsetzers (5) und/oder des DC/DC-Umsetzers (4) eine Steuerung über die Synthese der DC-Leistung und die Verteilung der DC-Leistung an den AC-Instrumentenanschluss (JA) und den DC-Instrumentenanschluss (JD) auszuüben, und ferner konfiguriert ist, die notwendige Leistung, die für Instrumente notwendig ist, die mit dem AC-Instrumentenanschluss (JA) und/oder dem DC-Instrumentenanschluss (JD) verbunden sind, einzuspeisen, ohne das Einspeisen der notwendigen Leistung anzuhalten,
**dadurch gekennzeichnet, dass**:
die Leistungs-Synthese/Verteilungs-Vorrichtung (2)
einen ersten Diodenabschnitt, der so installiert ist, dass eine Richtung eines Stroms von jedem der DC-Stromversorgungsvorrichtungs-Anschlüsse (J41) zur Leistungs-Synthese/Verteilungs-Vorrichtung (2) eine Vorwärtsrichtung ist; und einen ersten Schalterabschnitt zum Durchführen einer Unterbrechung der Verbindung jeder der DC-Stromversorgungsvorrichtungen (3) oder der Verbindung jeder der DC-Stromversorgungsvorrichtungen (3) enthält, wobei der erste Diodenabschnitt und der erste Schalterabschnitt derart vorgesehen sind, dass sie jedem der DC-Stromversorgungsvorrichtungs-Anschlüsse (J41) entsprechen,
einen zweiten Diodenabschnitt, der so installiert ist, dass eine Richtung eines Stroms von der Leistungs-Synthese/Verteilungs-Vorrichtung (2) zu jedem der DC-Instrumentenanschlüsse (JD) die Vorwärtsrichtung ist; einen dritten Diodenabschnitt, der so installiert ist, dass die Richtung des Stroms von jedem der DC-Instrumentenanschlüsse (JD) zur Leistungs-Synthese/Verteilungs-Vorrichtung (2) die Vorwärtsrichtung ist; einen zweiten Schalterabschnitt zum Durchführen des Umschaltens zwischen dem zweiten Diodenabschnitt und dem dritten Diodenabschnitt und zum Durchführen einer Unterbrechung der Verbindung der DC-Instrumente oder der Verbindung der DC-Instrumente und einen veränderlichen Widerstandsabschnitt enthält, wobei der zweite Diodenabschnitt, der dritte Diodenabschnitt, der zweite Schalterabschnitt und der veränderliche Widerstandsabschnitt derart vorgesehen sind, dass sie jedem der DC-Instrumentenanschlüsse (JD) entsprechen, und
einen dritten Schalterabschnitt zum Durchführen einer Unterbrechung der Verbindung der AC-Instrumente oder der Verbindung der AC-Instrumente enthält, wobei der dritte Schalterabschnitt derart vorgesehen ist, dass er jedem der AC-Instrumentenanschlüsse (JA) entspricht, und
die Leistungs-Synthese/Verteilungs-Vorrichtung (2) konfiguriert ist, nachdem alle Kopplungsleitungen, die den DC-Stromversorgungsvorrichtungs-Anschlüssen (J41) entsprechen, in eine zusammengeführt worden sind, die eine Kopplungsleitung derart anzuordnen, dass sie zu Kopplungsleitungen verteilt wird, die dem DC-Instrumentenanschluss (JD) und dem AC-Instrumentenanschluss (JA) entsprechen.

2. Steuervorrichtung (1) zum Steuern eines Elektrizitätseinspeisungs-Anforderungssystems (Z), wobei das Elektrizitätseinspeisungs-Anforderungssystem Folgendes umfasst:
mehrere DC-Stromversorgungsvorrichtungen (3);
eine Leistungs-Synthese/Verteilungs-Vorrichtung (2), die mit jeder der DC-Stromversorgungsvorrichtungen verbunden ist, die konfiguriert ist, eine DC-Leistung, die von den DC-Stromversorgungsvorrichtungen (3) eingegeben wird, zu synthetisieren und die synthetisierte DC-Leistung zu verteilen;
mindestens einen DC/AC-Umsetzer (5) und mindestens einen DC/DC-Umsetzer (4), die mit der Leistungs-Synthese/Verteilungs-Vorrichtung (2) verbunden sind;
mindestens einen AC-Instrumentenanschluss (JA), der mit dem DC/AC-Umsetzer (5) verbunden ist, wobei AC-Instrumente mit dem mindestens einen AC-Instrumentenanschluss (JA) verbunden sind;
mindestens einen DC-Instrumentenanschluss (JD), der mit dem DC/DC-Umsetzer (4) verbunden ist, wobei DC-Instrumente mit dem mindestens einen DC-Instrumentenanschluss verbunden sind,
wobei die Steuervorrichtung (1) konfiguriert ist, im Fall einer Änderung des verbundenen Instruments eine Anzahl der zu aktivierenden DC-Stromversorgungsvorrichtungen so zu berechnen und zu bestimmen, dass ein Leistungsbetrag so nahe wie möglich an einem notwendigen Leistungsgesamtwert für ein Instrument, das mit dem DC-Instrumentenanschluss (JD) und/oder dem AC-Instrumentenanschluss (JA) verbunden ist, liegt, wobei die Steuervorrichtung (1) einen Verarbeitungsabschnitt enthält, der konfiguriert ist, durch Steuern der Leistungs-Synthese/Verteilungs-Vorrichtung (2) und/oder des DC/AC-Umsetzers (5) und/oder des DC/DC-Umsetzers (4) eine Steuerung über die Synthese der DC-Leistung und die Verteilung der DC-Leistung an den AC-Instrumentenanschluss (JA) und den DC-Instrumentenanschluss (JD) auszuüben, und ferner konfiguriert ist, die notwendige Leistung, die für ein Instrument notwendig ist, das mit dem AC-Instrumentenanschluss (JA) und/oder dem DC-Instrumentenanschluss (JD) verbunden ist, einzuspeisen, ohne das Einspeisen der notwendigen Leistung anzuhalten,
**dadurch gekennzeichnet, dass**:
die Leistungs-Synthese/Verteilungs-Vorrichtung (2)
einen ersten Diodenabschnitt, der so installiert ist, dass eine Richtung eines Stroms von jedem der DC-Stromversorgungsvorrichtungs-Anschlüsse (J41) von den DC-Stromversorgungsvorrichtungen (3) zur Leistungs-Synthese/Verteilungs-Vorrichtung (2) eine Vorwärtsrichtung ist; und einen ersten Schalterabschnitt zum Durchführen einer Unterbrechung der Verbindung jeder der DC-Stromversorgungsvorrichtungen (3) oder der Verbindung jeder der DC-Stromversorgungsvorrichtungen (3) enthält, wobei der erste Diodenabschnitt und der erste Schalterabschnitt derart vorgesehen sind, dass sie jedem der DC-Stromversorgungsvorrichtungs-Anschlüsse (J41) entsprechen,
einen zweiten Diodenabschnitt, der so installiert ist, dass eine Richtung eines Stroms von der Leistungs-Synthese/Verteilungs-Vorrichtung (2) zu jedem der DC-Instrumentenanschlüsse (JD) die Vorwärtsrichtung ist; einen dritten Diodenabschnitt, der so installiert ist, dass die Richtung des Stroms von jedem der DC-Instrumentenanschlüsse (JD) zur Leistungs-Synthese/Verteilungs-Vorrichtung (2) die Vorwärtsrichtung ist; einen zweiten Schalterabschnitt zum Durchführen des Umschaltens zwischen dem zweiten Diodenabschnitt und dem dritten Diodenabschnitt und zum Durchführen einer Unterbrechung der Verbindung der DC-Instrumente oder der Verbindung der DC-Instrumente und einen veränderlichen Widerstandsabschnitt enthält, wobei der zweite Diodenabschnitt, der dritte Diodenabschnitt, der zweite Schalterabschnitt und der veränderliche Widerstandsabschnitt derart vorgesehen sind, dass sie jedem der DC-Instrumentenanschlüsse (JD) entsprechen, und
einen dritten Schalterabschnitt zum Durchführen einer Unterbrechung der Verbindung der AC-Instrumente oder der Verbindung der AC-Instrumente enthält, wobei der dritte Schalterabschnitt derart vorgesehen ist, dass er jedem der AC-Instrumentenanschlüsse (JA) entspricht, und
die Steuervorrichtung (1) konfiguriert ist, die Leistungs-Synthese/Verteilungs-Vorrichtung (2) derart zu betreiben, dass, nachdem alle Kopplungsleitungen, die den DC-Stromversorgungsvorrichtungs-Anschlüssen (J41) entsprechen, in eine zusammengeführt worden sind, die eine Kopplungsleitung derart angeordnet wird, dass sie zu Kopplungsleitungen verteilt wird, die dem DC-Instrumentenanschluss (JD) und dem AC-Instrumentenanschluss (JA) entsprechen.

3. Steuervorrichtung nach Anspruch 2, die Folgendes umfasst:
einen Betriebsart-Einstellabschnitt, der konfiguriert ist, Folgendes auszuführen:
eine AC-Einspeisungsbetriebsart zum Betreiben der Leistungs-Synthese/Verteilungs-Vorrichtung (2), die DC-Leistung zum DC/AC-Umsetzer (5) einzuspeisen und lediglich die Ausgangsleistung des DC/AC-Umsetzers über den AC-Instrumentenanschluss (JA) einzuspeisen;
eine AC/DC-Einspeisungsbetriebsart zum Betreiben der Leistungs-Synthese/Verteilungs-Vorrichtung (2), die DC-Leistung zum DC/AC-Umsetzer (5) einzuspeisen und die Ausgangsleistung des DC/AC-Umsetzers über den AC-Instrumentenanschluss einzuspeisen; und zum Betreiben der Leistungs-Synthese/Verteilungs-Vorrichtung (2), die DC-Leistung zum DC/DC-Umsetzer (4) einzuspeisen und gleichzeitig die Ausgangsleistung des DC/DC-Umsetzers über den DC-Instrumentenanschluss einzuspeisen; und
eine DC-Einspeisungsbetriebsart zum Betreiben der Leistungs-Synthese/Verteilungs-Vorrichtung (2), die DC-Leistung zum DC/DC-Umsetzer (4) einzuspeisen und lediglich die Ausgangsleistung des DC/DC-Umsetzers über den DC-Instrumentenanschluss (JA) einzuspeisen.

4. Steuervorrichtung nach Anspruch 2, wobei
der Verarbeitungsabschnitt konfiguriert ist, einen AusgangsleistungsSollwert jeder der DC-Stromversorgungsvorrichtungen (3) einzustellen.

5. Elektrizitätseinspeisungs-Bedarfsverfahren für ein Elektrizitätseinspeisungs-Anforderungssystem (Z), das Folgendes enthält:
mehrere DC-Stromversorgungsvorrichtungen (3);
eine Leistungs-Synthese/Verteilungs-Vorrichtung (2), die mit jeder der DC-Stromversorgungsvorrichtungen (3) verbunden ist, die eine DC-Leistung, die von den DC-Stromversorgungsvorrichtungen (3) eingegeben wird, synthetisiert und die die synthetisierte DC-Leistung verteilt;
mindestens einen DC/AC-Umsetzer (5) und mindestens einen DC/DC-Umsetzer (4), die mit der Leistungs-Synthese/Verteilungs-Vorrichtung (2) verbunden sind;
mindestens einen AC-Instrumentenanschluss (JA), der mit dem DC/AC-Umsetzer (5) verbunden ist, wobei AC-Instrumente mit dem mindestens einen AC-Instrumentenanschluss (JA) verbunden sind;
mindestens einen DC-Instrumentenanschluss (JD), der mit dem DC/DC-Umsetzer (4) verbunden ist, wobei DC-Instrumente mit dem mindestens einen DC-Instrumentenanschluss verbunden sind, und
eine Steuervorrichtung (1), die durch Steuern der Leistungs-Synthese/Verteilungs-Vorrichtung (2) und/oder des DC/AC-Umsetzers (5) und/oder des DC/DC-Umsetzers (4) eine Steuerung über die Synthese der DC-Leistung und die Verteilung der DC-Leistung an den AC-Instrumentenanschluss (JA) und den DC-Instrumentenanschluss (JD) ausübt,
wobei das Verfahren Folgendes umfasst:
einen DC-Stromversorgungsvorrichtungs-Bestimmungsschritt des Berechnens eines Gesamtwertes, der eine Summe einer Leistung, die für die AC-Instrumente, die mit dem AC-Instrumentenanschluss (JA) verbunden sind, notwendig ist, und einer Leistung, die für die DC-Instrumente, die mit dem DC-Instrumentenanschluss (JD) verbunden sind, notwendig ist, ist, wenn ein Instrument, das mit dem DC-Instrumentenanschluss (JD) und/oder dem AC-Instrumentenanschluss (JA) verbunden ist, geändert wird, und des Bestimmens einer Anzahl der zu aktivierenden DC-Stromversorgungsvorrichtungen (3) und der zu aktivierenden DC-Stromversorgungsvorrichtungen (3) so, dass ein Leistungsbetrag dem Gesamtwert so ähnlich wie möglich ist;
einen Ausgangsleistungssollwert-Berechnungsschritt des Berechnens eines Ausgangsleistungs-Sollwertes jeder der DC-Stromversorgungsvorrichtungen (3);
einen DC-Stromversorgungsvorrichtungs-Aktivierungsschritt des Aktivierens der DC-Stromversorgungsvorrichtungen (3), die im DC-Stromversorgungsvorrichtungs-Bestimmungsschritt bestimmt worden sind;
einen DC-Leistungs-Synthetisierungsschritt des Erzeugens einer synthetisierten DC-Leistung durch Bewirken, dass die Leistungs-Synthese/Verteilungs-Vorrichtung (2) die DC-Leistung, die von den DC-Stromversorgungsvorrichtungen (3) eingespeist wird, synthetisiert;
einen AC-Leistungs-Verteilungsschritt des Verteilens der synthetisierten DC-Leistung an den DC/AC-Umsetzer (5), mit dem die AC-Instrumente verbunden sind, auf der Grundlage der Leistung, die für die AC-Instrumente notwendig ist; und
einen DC-Leistungs-Verteilungsschritt des Verteilens der synthetisierten DC-Leistung an den DC/DC-Umsetzer (4), mit dem die DC-Instrumente verbunden sind, auf der Grundlage der Leistung, die für die DC-Instrumente notwendig ist, wobei
das Elektrizitätseinspeisungs-Anforderungssystem (Z) die Schritte ausführt, um dadurch eine Steuerung über die Synthese der DC-Leistung und die Verteilung der DC-Leistung an den AC-Instrumentenanschluss (JA) und den DC-Instrumentenanschluss (JD) auszuüben, und die notwendige Leistung, die für Instrumente notwendig ist, die mit dem AC-Instrumentenanschluss (JA) und dem DC-Instrumentenanschluss (JD) verbunden sind, einspeist, ohne das Einspeisen der notwendigen Leistung anzuhalten,
**dadurch gekennzeichnet, dass**:
ein zusätzlicher Benachrichtigungsschritt des Benachrichtigens eines Benutzers, die DC-Stromversorgungsvorrichtung zusätzlich anzuschließen, durchgeführt wird, wenn der Gesamtwert einen Gesamtwert der Nennausgangsleistung der DC-Stromversorgungsvorrichtungen (3) überschreitet, und
der Ausgangsleistungssollwert-Berechnungsschritt durchgeführt wird, wenn die DC-Stromversorgungsvorrichtung zusätzlich angeschlossen wird.

6. Elektrizitätseinspeisungs-Bedarfsverfahren nach Anspruch 5, wobei die Elektrizitätseinspeisungs-Bedarfsvorrichtung Folgendes ausführt:
einen Überwachungsschritt des Überwachens der Betriebszustände der DC-Stromversorgungsvorrichtungen (3);
einen Benachrichtigungsschritt des Benachrichtigens eines Benutzers, die DC-Stromversorgungsvorrichtung, in der die Anomalie detektiert worden ist, durch die reguläre DC-Stromversorgungsvorrichtung zu ersetzen, im Fall des Detektierens einer Anomalie in irgendeiner der DC-Stromversorgungsvorrichtungen (3), in einem Zustand des ununterbrochenen Einspeisens von Leistung; und
einen Neuberechnungsschritt des Neuberechnens des Ausgangsleistungs-Sollwertes jeder der DC-Stromversorgungsvorrichtungen (3) aufgrund des Verbindens der regulären DC-Stromversorgungsvorrichtung.

7. Elektrizitätseinspeisungs-Bedarfsverfahren nach Anspruch 5, wobei die Elektrizitätseinspeisungs-Bedarfsvorrichtung Folgendes ausführt:
einen Schwankungserwartungswert-Erfassungsschritt des Erfassens eines Erwartungswertes einer Schwankung eines Energieversorgungssystems; und
einen Neuberechnungsschritt des Neuberechnens des Ausgangsleistungs-Sollwertes jeder der DC-Stromversorgungsvorrichtungen (3) auf der Grundlage des Erwartungswertes.

## Revendications

1. Système (Z) d'alimentation/demande d'électricité, comprenant :
une pluralité de jonctions (J41) de dispositifs d'alimentation de puissance CC destinées à connecter des dispositifs (3) d'alimentation de puissance CC configurés pour alimenter une puissance CC ;
un dispositif (2) de distribution/synthèse de puissance connecté aux jonctions (J41) de dispositifs d'alimentation de puissance CC, destiné à synthétiser la puissance CC entrée depuis les jonctions (J41) de dispositifs d'alimentation de puissance CC, et à distribuer la puissance CC synthétisée ;
au moins une jonction (J11, J12) de convertisseur CC/CA configurée pour connecter un convertisseur CC/CA (5) au dispositif (2) de synthèse/distribution de puissance ;
au moins une jonction (J21, J22) de convertisseur CC/CC qui connecte un convertisseur CC/CC (4) au dispositif (2) de synthèse/distribution de puissance ;
au moins une jonction (JA) d'instruments CA, qui est connectée au convertisseur CC/CA (5) via la jonction (J12) de convertisseur CC/CA, des instruments CA étant connectés à ladite au moins une jonction (JA) d'instruments CA ;
au moins une jonction (JD) d'instruments CC, qui est connectée au convertisseur CC/CC (4) via la jonction (J22) de convertisseur CC/CC, des instruments CC étant connectés à ladite au moins une jonction (J22) de convertisseur CC/CC ; et
un dispositif (1) de commande est configuré pour calculer et déterminer un nombre de dispositifs (3) d'alimentation de puissance CC devant être activés de telle manière qu'une amplitude de puissance est aussi proche que possible d'une valeur totale de puissance nécessaire à un instrument connecté à l'une au moins de la jonction (JD) d'instruments CC et de la jonction (JA) d'instruments CA en cas de changement dans l'instrument connecté, et est en outre configuré pour exercer une commande de synthèse de la puissance CC et de distribution de la puissance CC à la jonction (JA) d'instruments CA et à la jonction (JD) d'instruments CC en commandant l'un au moins du dispositif (2) de synthèse/distribution de puissance, du convertisseur CC/CA (5), et du convertisseur CC/CC (4), et est en outre configuré pour alimenter une puissance nécessaire, nécessaire à des instruments connectés à l'une au moins de la jonction (JA) d'instruments CA et de la jonction (JD) d'instruments CC, sans arrêter d'alimenter la puissance nécessaire,
**caractérisé en ce que** :
le dispositif (2) de synthèse/distribution de puissance
inclut une première section à diode installée de telle manière qu'une direction d'un courant depuis chacune des jonctions (J41) de dispositifs d'alimentation de puissance CC jusqu'au dispositif (2) de synthèse/distribution de puissance est une direction avant ; et une première section à commutateur destinée à effectuer une interruption de connexion de chacun des dispositifs (3) d'alimentation de puissance CC ou la connexion de chacun des dispositifs (3) d'alimentation de puissance CC, la première section à diode et la première section à commutateur étant prévues pour correspondre à chacune des jonctions (J41) de dispositifs d'alimentation de puissance CC, inclut une deuxième section à diode installée de telle manière qu'une direction d'un courant depuis le dispositif (2) de synthèse/distribution de puissance jusqu'à chacune des jonctions (JD) d'instruments CC est la direction avant, une troisième section à diode installée de telle manière que la direction du courant depuis chacune des jonctions (JD) d'instruments CC jusqu'au dispositif (2) de synthèse/distribution de puissance est la direction avant ; une deuxième section à commutateur destinée à effectuer un basculement entre la deuxième section à diode et la troisième section à diode et à effectuer une interruption de connexion des instruments CC ou la la connexion des instruments CC, et une section à résistance variable, la deuxième section à diode, la troisième section à diode, la deuxième section à commutateur, et la section à résistance variable étant prévues pour correspondre à chacune des jonctions (JD) d'instruments CC, et
inclut une troisième section à commutateur destinée à effectuer une interruption de connexion des instruments CA ou la connexion des instruments CA, la troisième section à commutateur étant prévue pour correspondre à chacune des jonctions (JA) d'instruments CA, et
le dispositif (2) de synthèse/distribution de puissance est configuré pour, après que toutes les lignes d'interconnexion correspondant aux jonctions (J41) de dispositifs d'alimentation de puissance CC sont fusionnées en une, agencer ladite une ligne d'interconnexion pour qu'elle soit distribuée à des lignes d'interconnexion correspondant à la jonction (JD) d'instruments CC et à la jonction (JA) d'instruments CA.

2. Dispositif (1) de commande destiné à commander un système (Z) d'alimentation/demande d'électricité, le système d'alimentation/demande d'électricité comprenant :
une pluralité de dispositifs (3) d'alimentation de puissance CC ;
un dispositif (2) de synthèse/distribution de puissance qui est connecté à chacun des dispositifs d'alimentation de puissance CC, configuré pour synthétiser une puissance CC entrée depuis les dispositifs (3) d'alimentation de puissance CC, et pour distribuer la puissance CC synthétisée ;
au moins un convertisseur CC/CA (5) et au moins un convertisseur CC/CC (4) connectés au dispositif (2) de synthèse/distribution de puissance ;
au moins une jonction (JA) d'instruments CA connectée au convertisseur CC/CA (5), des instruments CA étant connectés à ladite au moins une jonction d'instruments CA ;
au moins une jonction (JD) d'instruments CC connectée au convertisseur CC/CC (4), des instruments CC étant connectés à ladite au moins une jonction d'instruments CC,
le dispositif (1) de commande étant configuré pour calculer et déterminer un nombre de dispositifs d'alimentation de puissance CC devant être activés de telle manière qu'une amplitude de puissance est aussi proche que possible d'une valeur totale de puissance nécessaire à un instrument connecté à l'une au moins de la jonction (JD) d'instruments CC et de la jonction (JA) d'instruments CA en cas de changement dans l'instrument connecté, le dispositif (1) de commande incluant une section de traitement configurée pour exercer une commande de synthèse de la puissance CC et de distribution de la puissance CC à la jonction (JA) d'instruments CA et à la jonction (JD) d'instruments CC en commandant l'un au moins du dispositif (2) de synthèse/distribution de puissance, du convertisseur CC/CA (5), et du convertisseur CC/CC (4), et est en outre configuré pour alimenter une puissance nécessaire, nécessaire à un instrument connecté à l'une au moins de la jonction (JA) d'instruments CA et de la jonction (JD) d'instruments CC, sans arrêter d'alimenter la puissance nécessaire,
**caractérisé en ce que** :
le dispositif (2) de synthèse/distribution de puissance
inclut une première section à diode installée de telle manière qu'une direction d'un courant depuis chacune des jonctions (J41) de dispositifs d'alimentation de puissance CC jusqu'au dispositif (2) de synthèse/distribution de puissance est une direction avant ; et une première section à commutateur destinée à effectuer une interruption de connexion de chacun des dispositifs (3) d'alimentation de puissance CC ou la connexion de chacun des dispositifs (3) d'alimentation de puissance CC, la première section à diode et la première section à commutateur étant prévues pour correspondre à chacune des jonctions (J41) de dispositifs d'alimentation de puissance CC, inclut une deuxième section à diode installée de telle manière qu'une direction d'un courant depuis le dispositif (2) de synthèse/distribution de puissance jusqu'à chacune des jonctions (JD) d'instruments CC est la direction avant, une troisième section à diode installée de telle manière que la direction du courant depuis chacune des jonctions (JD) d'instruments CC jusqu'au dispositif (2) de synthèse/distribution de puissance est la direction avant ; une deuxième section à commutateur destinée à effectuer un basculement entre la deuxième section à diode et la troisième section à diode et à effectuer une interruption de connexion des instruments CC ou la connexion des instruments CC, et une section à résistance variable, la deuxième section à diode, la troisième section à diode, la deuxième section à commutateur, et la section à résistance variable étant prévues pour correspondre à chacune des jonctions (JD) d'instruments CC, et
inclut une troisième section à commutateur destinée à effectuer une interruption de connexion des instruments CA ou la connexion des instruments CA, la troisième section à commutateur étant prévue pour correspondre à chacune des jonctions (JA) d'instruments CA, et
le dispositif (1) de commande est configuré pour amener le dispositif (2) de synthèse/distribution de puissance à,
après que toutes les lignes d'interconnexion correspondant aux jonctions (J41) de dispositifs d'alimentation de puissance CC sont fusionnées en une, agencer ladite une ligne d'interconnexion pour qu'elle soit distribuée à des lignes d'interconnexion correspondant à la jonction (JD) d'instruments CC et à la jonction (JA) d'instruments CA.

3. Dispositif de commande selon la revendication 2, comprenant
une section d'établissement de mode configurée pour exécuter :
un mode alimentation CA destiné à actionner le dispositif (2) de synthèse/distribution de puissance, à alimenter la puissance CC au convertisseur CC/CA (5), et à alimenter uniquement une puissance de sortie du convertisseur CC/CA via la jonction (JA) d'instruments CA ;
un mode alimentation CA/CC destiné à actionner le dispositif (2) de synthèse/distribution de puissance, à alimenter la puissance CC au convertisseur CC/CA (5), et à alimenter la puissance de sortie du convertisseur CC/CA via la jonction d'instruments CA ; et à actionner le dispositif (2) de synthèse/distribution de puissance, à alimenter la puissance CC au convertisseur CC/CC (4), et à alimenter simultanément une puissance de sortie du convertisseur CC/CC (4) via la jonction d'instruments CC ; et
un mode alimentation CC destinée à actionner le dispositif (2) de synthèse/distribution de puissance, alimenter la puissance CC au convertisseur CC/CC (4), et à alimenter uniquement la puissance de sortie du convertisseur CC/CC via la jonction d'instruments CC.

4. Dispositif de commande selon la revendication 2, dans lequel
la section de traitement est configurée pour fixer une valeur cible de puissance de sortie de chacun des dispositifs (3) d'alimentation de puissance CC.

5. Procédé d'alimentation/demande d'électricité pour un système (Z) d'alimentation/demande d'électricité, incluant :
une pluralité de dispositifs (3) d'alimentation de puissance CC,
un dispositif (2) de distribution/synthèse de puissance qui est connecté à chacun des dispositifs (3) d'alimentation de puissance CC, qui synthétise une puissance CC entrée depuis les dispositifs (3) d'alimentation de puissance CC, et qui distribue la puissance CC synthétisée ;
au moins un convertisseur CC/CA (5) et au moins un convertisseur CC/CC (4) connectés au dispositif (2) de synthèse/distribution de puissance, au moins une jonction (JA) d'instruments CA connectée au convertisseur CC/CA (5), des instruments CA étant connectés à ladite au moins une jonction (JA) d'instruments CA ;
au moins une jonction (JD) d'instruments CC connectée au convertisseur CC/CC (4), des instruments CC étant connectés à ladite au moins une jonction (JD) d'instruments CC, et
un dispositif (1) de commande qui exerce une commande de synthèse de la puissance CC et de distribution de la puissance CC à la jonction (JA) d'instruments CA et à la jonction (JD) d'instruments CC en commandant l'un au moins du dispositif (2) de synthèse/distribution de puissance, du convertisseur CC/CA (5), et du convertisseur CC/CC (4), le procédé comprenant en outre :
une étape de détermination de dispositifs d'alimentation de puissance CC consistant à calculer valeur totale qui est une somme d'une puissance nécessaire aux instruments CA connectés à la jonction (JA) d'instruments CA et d'une puissance nécessaire aux instruments CC connectés à la jonction (JD) d'instruments CC dans un cas dans lequel un instrument connecté à l'une au moins de la jonction (JD) d'instruments CC et de la jonction (JA) d'instruments CA est changé, et à déterminer un nombre de dispositifs (3) d'alimentation de puissance CC devant être activés de telle manière qu'une amplitude de puissance est aussi similaire que possible de à valeur totale ;
une étape de calcul de valeur cible de ce puissance de sortie consistant à calculer une valeur cible de puissance de sortie de chacun des dispositifs (3) d'alimentation de puissance CC ;
une étape d'activation de dispositifs d'alimentation de puissance CC consistant à activer les dispositifs (3) d'alimentation de puissance CC déterminés dans l'état de détermination de dispositifs d'alimentation de puissance CC ;
une étape de synthétisation de puissance CC consistant à générer une puissance CC synthétisée en amenant le dispositif (2) de synthèse/distribution de puissance à synthétiser la puissance CC alimentée depuis les dispositifs (3) d'alimentation de puissance CC ;
une étape de distribution de puissance CA consistant à distribuer la puissance CC synthétisée au convertisseur CC/CA (5) auquel les instruments CA sont connectés, sur une base de la puissance nécessaire aux instruments CA ; et
une étape de distribution de puissance CC consistant à distribuer la puissance CC synthétisée au convertisseur CC/CC (4) auquel les instruments CC sont connectés sur une base de la puissance nécessaire aux instruments CC, dans lequel
le système (Z) d'alimentation/demande d'électricité exécute les étapes pour d'exercer une commande de synthèse de la puissance CC et de distribution de la puissance CC à la jonction (JA) d'instruments CA et à la jonction (JD) d'instruments CC, et alimente une puissance nécessaire, nécessaire aux instruments connectés à la jonction (JA) d'instruments CA, sans arrêter d'alimenter la puissance nécessaire,
**caractérisé en ce que** :
une étape de notification d'addition consistant à notifier à un utilisateur de connecter additionnellement le dispositif d'alimentation de puissance CC est effectuée dans un cas dans lequel la valeur totale dépasse une valeur totale de puissance de sortie nominale des dispositifs (3) d'alimentation de puissance CC, et
une étape de calcul de valeur cible de puissance de sortie est effectuée quand le dispositif d'alimentation de puissance CC est connecté additionnellement.

6. Procédé d'alimentation/demande d'électricité selon la revendication 5, dans lequel le dispositif d'alimentation/demande d'électricité exécute :
une étape de surveillance consistant à surveiller des états opérationnels des dispositifs (3) d'alimentation de puissance CC ;
une étape de notification consistant à, dans un cas où une anomalie est détectée dans l'un quelconque des dispositifs (3) d'alimentation de puissance CC, notifier à un utilisateur de remplacer le dispositif d'alimentation de puissance CC dans lequel l'anomalie est détectée par le dispositif d'alimentation de puissance CC normal dans un état de continuité d'alimentation de puissance ; et
une étape de recalcul consistant à recalculer la valeur cible de puissance de sortie de chacun des dispositifs (3) d'alimentation de puissance CC lors d'une connexion du dispositif d'alimentation de puissance CC normal.

7. Procédé d'alimentation/demande électricité selon la revendication 5, dans lequel le dispositif d'alimentation/demande électricité exécute :
une étape d'acquisition de valeur attendue de fluctuation consistant à acquérir une valeur attendue d'une fluctuation dans un système de puissance ; et
une étape de recalcul consistant à recalculer la valeur cible de puissance de sortie de chacun des dispositifs (3) d'alimentation de puissance CC sur une base de la valeur attendue.
